# EUROPEAN PATENT APPLICATION

(11) **EP 4 847 334 A1**
(43) Date of publication of application: **02.12.2026**
(21) Application number: 25757824.5
(22) Date of filing: 21.02.2025
(51) Int. Cl.: B60W 30/06, B60W 30/08, B60W 40/02

(54) **PARKING METHOD AND APPARATUS, AND VEHICLE**

(30) Priority: 21.02.2024 CN 202410193467; 12.08.2024 CN 202411107046
(71) Applicant: Shenzhen Yinwang Intelligent Technologies Co., Ltd., Shenzhen, Guangdong 518110 (CN)
(72) Inventor: QIN, Cai, Shenzhen, Guangdong 518129 (CN); YU, Hao, Shenzhen, Guangdong 518129 (CN); SHEN, Yujie, Shenzhen, Guangdong 518129 (CN); WANG, Wenxiao, Shenzhen, Guangdong 518129 (CN)
(74) Representative: Gill Jennings & Every LLP
(86) International application number: PCT/CN2025/078492
(87) International publication number: WO 2025/176190

(57) **Abstract**

A parking method includes: receiving a first instruction from a user, where the first instruction instructs to park into a target parking space by using a remote parking assist RPA function, and a temporary obstacle is placed in the target parking space; in response to the received first instruction, sending a second instruction to a mobile terminal, and controlling a prompt apparatus to prompt the user to get off a vehicle and remove the temporary obstacle, where the second instruction instructs to park into the target parking space by using the RPA function; and when it is detected that the user gets off the vehicle and a third instruction sent by the mobile terminal is received, controlling the vehicle to be parked into the target parking space, where the third instruction instructs the vehicle to be parked into the target parking space. A parking apparatus, a vehicle (100), a mobile terminal, a computer-readable storage medium, a computer program product, and a chip are also disclosed. The parking method may be applied to an intelligent vehicle or an electric vehicle, to help reduce cumbersome operations performed by a user when the user uses an RPA function, to help improve parking experience of the user.

## Description

This application claims priority to Chinese Patent Application No. 202410193467.6, filed with the China National Intellectual Property Administration on February 21, 2024 and entitled "PARKING METHOD AND APPARATUS, AND VEHICLE", and priority to Chinese Patent Application No. 202411107046.3, filed with the China National Intellectual Property Administration on August 12, 2024 and entitled "PARKING METHOD AND APPARATUS, AND VEHICLE", which are incorporated herein by reference in their entireties.

### TECHNICAL FIELD

This application relates to the field of intelligent driving, and more specifically, to a parking method and apparatus, and a vehicle.

### BACKGROUND

Auto parking (auto parking, AP) means automatically parking a vehicle into a space, that is, an autonomous driving system may semi-automatically or fully automatically help a user park the vehicle into a parking space. Auto parking may include auto parking assist (auto parking assist, APA), remote parking assist (remote parking assist, RPA), auto valet parking (auto valet parking, AVP), and the like.

Currently, a user can use an RPA function only when a target parking space is a vacant parking space. This limits a usage scenario of the RPA function, and affects parking experience of the user.

### SUMMARY

This application provides a parking method and apparatus, and a vehicle, to help reduce cumbersome operations performed by a user when the user uses an RPA function, to help improve parking experience of the user.

According to a first aspect, a parking method is provided. The method includes: receiving a first instruction from a user, where the first instruction instructs to park into a target parking space by using a remote parking assist RPA function, and a temporary obstacle is placed in the target parking space; in response to receiving the first instruction, sending a second instruction to a mobile terminal, and controlling a prompt apparatus to prompt the user to get off a vehicle and remove the temporary obstacle, where the second instruction instructs to park into the target parking space by using the RPA function; and when it is detected that the user gets off the vehicle and a third instruction sent by the mobile terminal is received, controlling the vehicle to be parked into the target parking space, where the third instruction instructs the vehicle to be parked into the target parking space.

Currently, when a parking space is occupied by a temporary obstacle, the parking space is not released (or the parking space is an unreleased parking space). In this case, the user cannot select the parking space, or the user cannot park into the parking space by using an APA function or the RPA function. The user needs to get off the vehicle to remove the temporary obstacle, and then get back on the vehicle to start an auto parking function. In this way, parking experience of the user is poor.

Based on the foregoing technical solution, the vehicle may recognize a parking space occupied by a temporary obstacle (the parking space is in a released state), and the user may select the parking space occupied by the temporary obstacle as the target parking space and park into the target parking space by using the RPA function. When detecting that the user selects the RPA function, the vehicle may prompt the user to get off the vehicle and remove the temporary obstacle. In this way, the user does not need to get off the vehicle to remove the temporary obstacle and then get on the vehicle to select the RPA function. This reduces cumbersome operations performed by the user when the user uses the RPA function, and helps improve parking experience of the user.

In some possible implementations, a wireless connection (for example, a Bluetooth connection) may be established between the mobile terminal and the vehicle.

In some possible implementations, receiving the first instruction of the user includes: receiving an operation that the user taps the RPA function on a display of the vehicle.

In some possible implementations, controlling the prompt apparatus to prompt the user to get off the vehicle and remove the temporary obstacle includes: controlling the display of the vehicle to display prompt information, where the prompt information is used to prompt the user to get off the vehicle and remove the temporary obstacle.

The temporary obstacle may be a temporary obstacle placed in the parking space, or may be a temporary obstacle placed on a parking path for parking the vehicle into the target parking space. The following uses the temporary obstacle placed in the parking space as an example for description.

In some possible implementations, the mobile terminal may be a mobile phone, a tablet computer, a wearable electronic device (for example, a smartwatch) having a wireless communication function, or the like.

With reference to the first aspect, in some implementations of the first aspect, before receiving the first instruction of the user, the method further includes: obtaining information about one or more parking spaces, where the one or more parking spaces include the target parking space; and when receiving a fourth instruction of the user, controlling the prompt apparatus to give a prompt that the temporary obstacle is placed in the target parking space and only the RPA function is supported for the target parking space, where the fourth instruction is an instruction of the user for selecting the target parking space.

Based on the foregoing technical solution, the vehicle may recognize a parking space occupied by a temporary obstacle (the parking space occupied by the temporary obstacle is in a released state) and prompt the user that only the RPA function is supported for the parking space. In this way, before the temporary obstacle is removed from the parking space, the user may select the parking space as the target parking space, and the user does not need to get off the vehicle to remove the temporary obstacle and then get on the vehicle to select the RPA function. This reduces cumbersome operations performed by the user when the user uses the RPA function, and helps improve parking experience of the user.

In some possible implementations, controlling the prompt apparatus to give the prompt that the temporary obstacle is placed in the target parking space includes: controlling the display of the vehicle to display the target parking space.

In some possible implementations, the one or more parking spaces include a vacant parking space and a parking space occupied by a temporary obstacle, and the method further includes: when obtaining the information about the one or more parking spaces, controlling the display of the vehicle to display the information about the one or more parking spaces, a control corresponding to the APA function, and a control corresponding to the RPA function; and when an operation that the user selects the target parking space through the display is detected, controlling the display to show that the control corresponding to the APA function cannot be tapped and the control corresponding to the RPA function can be tapped.

With reference to the first aspect, in some implementations of the first aspect, the method further includes: when a distance between the vehicle and the temporary obstacle is less than or equal to a preset distance, controlling the vehicle to stop parking into the target parking space, and sending a fifth instruction to the mobile terminal, where the fifth instruction instructs the mobile terminal to prompt the user to remove the temporary obstacle.

Based on the foregoing technical solution, in a process in which the vehicle performs auto parking into the target parking space by using the RPA function, if the distance between the vehicle and the temporary obstacle is less than or equal to the preset distance, the vehicle may stop parking into the target parking space and send the fifth instruction to the mobile terminal. In this way, the mobile terminal may prompt the user to remove the temporary obstacle, so that the vehicle can continue parking into the target parking space after the user removes the temporary obstacle.

With reference to the first aspect, in some implementations of the first aspect, the method further includes: when it is detected that the user removes the temporary obstacle within first preset duration, controlling the vehicle to continue parking into the target parking space.

Based on the foregoing technical solution, when it is detected that the user removes the temporary obstacle within the first preset duration, the vehicle may continue auto parking into the target parking space. In this way, after seeing the prompt on the mobile terminal, the user only needs to remove the temporary obstacle, so that the vehicle can continue auto parking into the target parking space. This helps improve parking experience of the user.

In some possible implementations, the vehicle may be in an RPA automatic resume state within the first preset duration. To be specific, the RPA function can be automatically resumed as long as the vehicle detects that the temporary obstacle is removed within the first preset duration, so that the vehicle continues to be controlled for parking into the target parking space.

With reference to the first aspect, in some implementations of the first aspect, the method further includes: sending a sixth instruction to the mobile terminal when it is not detected that the user removes the temporary obstacle within first preset duration, where the sixth instruction indicates that the temporary obstacle is not removed within the first preset duration.

In some possible implementations, the method further includes: controlling a gear of the vehicle to be switched to a parking gear when it is not detected that the user removes the temporary obstacle within the first preset duration.

With reference to the first aspect, in some implementations of the first aspect, the method further includes: when a seventh instruction sent by the mobile terminal is received and it is detected that the temporary obstacle is removed, controlling the vehicle to continue parking into the target parking space, where the seventh instruction instructs to resume the RPA function.

Based on the foregoing technical solution, when the seventh instruction sent by the mobile terminal is received and it is detected that the temporary obstacle is removed, the vehicle can resume the RPA function, so that the vehicle continues to be controlled for parking into the target parking space.

In some possible implementations, when the seventh instruction sent by the mobile terminal is received and it is detected that the temporary obstacle is removed, controlling the vehicle to continue parking into the target parking space includes: when within second preset duration, the seventh instruction sent by the mobile terminal is received and it is detected that the temporary obstacle is removed, controlling the vehicle to continue parking into the target parking space.

In some possible implementations, the vehicle may be in an RPA passive resume state within the second preset duration. To be specific, the RPA function can be resumed only when the vehicle receives the seventh instruction (an RPA function resume instruction) sent by the mobile terminal and detects that the temporary obstacle is removed within the second preset duration, so that the vehicle continues to be controlled for parking into the target parking space.

According to a second aspect, a parking method is provided. The method includes: receiving a second instruction sent by a vehicle, where the second instruction instructs to park into a target parking space by using an RPA function, and the target parking space is a parking space that is recognized by the vehicle and in which a temporary obstacle is placed; controlling, according to the second instruction, a display apparatus to display a first interface, where the first interface includes a first control, and the first control is a control for enabling the RPA function; and sending a third instruction to the vehicle when obtaining a first input of a user for the first control, where the third instruction instructs the vehicle to start parking into the target parking space.

Based on the foregoing technical solution, when obtaining the second instruction sent by the vehicle, a mobile terminal may display a display interface of remote parking assist. When obtaining an instruction of the user for enabling the RPA function, the vehicle may be indicated to perform parking into the target parking space. In this way, the user may remove the temporary obstacle while enabling the RPA function on a mobile phone, or the user may remove the temporary obstacle after enabling the RPA function on a mobile phone (or the user may remove the temporary obstacle in a process of parking the vehicle into the target parking space by using the RPA function). This helps improve parking efficiency of the user, and improve parking experience of the user.

In some possible implementations, the method further includes: receiving information that is about the vehicle, the temporary obstacle, and the parking space and that is sent by the vehicle; and displaying the information about the vehicle, the temporary obstacle, and the parking space through the first interface.

With reference to the second aspect, in some implementations of the second aspect, the method further includes: when obtaining the first input of the user for the first control, controlling the display apparatus to switch from displaying the first interface to displaying a second interface, where the second interface is a display interface of parking the vehicle into the target parking space.

With reference to the second aspect, in some implementations of the second aspect, the method further includes: receiving a fifth instruction sent by the vehicle, where the fifth instruction instructs the mobile terminal to prompt the user to remove the temporary obstacle; and controlling, according to the fifth instruction, the display apparatus to switch from displaying the second interface to displaying a third interface, where the third interface includes first prompt information, and the first prompt information is used to prompt the user to remove the temporary obstacle.

Based on the foregoing technical solution, when receiving the fifth instruction sent by the vehicle, the mobile terminal may display the first prompt information through the third interface, to prompt the user to remove the temporary obstacle, so that the vehicle can be parked into the target parking space.

In some possible implementations, controlling, according to the fifth instruction, the display apparatus to switch from displaying the second interface to displaying the third interface includes: controlling, according to the fifth instruction, the display apparatus to switch from displaying the second interface to displaying the third interface, and controlling the mobile terminal to vibrate.

With reference to the second aspect, in some implementations of the second aspect, the method further includes: receiving a sixth instruction sent by the vehicle, where the sixth instruction indicates that the temporary obstacle is not removed within first preset duration; and controlling, according to the sixth instruction, the display apparatus to switch from displaying the third interface to displaying a fourth interface, where the fourth interface includes second prompt information, and the second prompt information is used to give a prompt that the RPA function is paused.

Based on the foregoing technical solution, when the sixth instruction sent by the vehicle is received, the vehicle may display the second prompt information on the fourth interface, to prompt the user that the RPA function is paused.

In some possible implementations, the fourth interface further includes gear information, and the gear information indicates that the vehicle is in a parking gear.

With reference to the second aspect, in some implementations of the second aspect, the fourth interface further includes a second control, the second control is a control for resuming an auto parking function, and the method further includes: when obtaining a second input of the user for the second control, sending a seventh instruction to the vehicle, where the seventh instruction instructs to resume the RPA function.

Based on the foregoing technical solution, the user may resume the RPA function by using the second control on the fourth interface. After receiving the seventh instruction and detecting that the temporary obstacle is removed, the vehicle may resume the RPA function, to continue parking into the target parking space.

According to a third aspect, a parking apparatus is provided. The apparatus includes: a receiving unit, configured to receive a first instruction from a user, where the first instruction instructs to park into a target parking space by using a remote parking assist RPA function, and a temporary obstacle is placed in the target parking space; a sending unit, configured to: in response to receiving the first instruction, send a second instruction to a mobile terminal, and control a prompt apparatus to prompt the user to get off a vehicle and remove the temporary obstacle, where the second instruction instructs to park into the target parking space by using the RPA function; and a control unit, configured to: when it is detected that the user gets off the vehicle and a third instruction sent by the mobile terminal is received, control the vehicle to be parked into the target parking space, where the third instruction instructs the vehicle to be parked into the target parking space.

With reference to the third aspect, in some implementations of the third aspect, the apparatus further includes: an obtaining unit, configured to obtain information about one or more parking spaces before the receiving unit receives the first instruction of the user, where the one or more parking spaces include the target parking space. The control unit is further configured to: when the receiving unit receives a fourth instruction of the user, control the prompt apparatus to give a prompt that the temporary obstacle is placed in the target parking space and only the RPA function is supported for the target parking space, where the fourth instruction is an instruction of the user for selecting the target parking space.

With reference to the third aspect, in some implementations of the third aspect, the control unit is further configured to: when a distance between the vehicle and the temporary obstacle is less than or equal to a preset distance, control the vehicle to stop parking into the target parking space, and send a fifth instruction to the mobile terminal, where the fifth instruction instructs the mobile terminal to prompt the user to remove the temporary obstacle.

With reference to the third aspect, in some implementations of the third aspect, the control unit is further configured to: when it is detected that the user removes the temporary obstacle within first preset duration, control the vehicle to continue parking into the target parking space.

With reference to the third aspect, in some implementations of the third aspect, the sending unit is further configured to send a sixth instruction to the mobile terminal when the control unit does not detect that the user removes the temporary obstacle within first preset duration, where the sixth instruction indicates that the temporary obstacle is not removed within the first preset duration.

With reference to the third aspect, in some implementations of the third aspect, the control unit is further configured to: when the receiving unit receives a seventh instruction sent by the mobile terminal and it is detected that the temporary obstacle is removed, control the vehicle to continue parking into the target parking space, where the seventh instruction instructs to resume the RPA function.

According to a fourth aspect, a parking apparatus is provided. The apparatus includes: a receiving unit, configured to receive a second instruction sent by a vehicle, where the second instruction instructs to park into a target parking space by using an RPA function, and the target parking space is a parking space that is recognized by the vehicle and in which a temporary obstacle is placed; a control unit, configured to control, according to the second instruction, a display apparatus to display a first interface, where the first interface includes a first control, and the first control is a control for enabling the RPA function; and a sending unit, configured to send a third instruction to the vehicle when an obtaining unit obtains a first input of a user for the first control, where the third instruction instructs the vehicle to start parking into the target parking space.

With reference to the fourth aspect, in some implementations of the fourth aspect, the control unit is further configured to: when the obtaining unit obtains the first input of the user for the first control, control the display apparatus to switch from displaying the first interface to displaying a second interface, where the second interface is a display interface of parking the vehicle into the target parking space. The receiving unit is further configured to receive a fifth instruction sent by the vehicle, where the fifth instruction instructs a mobile terminal to prompt the user to remove the temporary obstacle. The control unit is further configured to control, according to the fifth instruction, the display apparatus to switch from displaying the second interface to displaying a third interface, where the third interface includes first prompt information, and the first prompt information is used to prompt the user to remove the temporary obstacle.

With reference to the fourth aspect, in some implementations of the fourth aspect, the receiving unit is further configured to receive a sixth instruction sent by the vehicle, where the sixth instruction indicates that the temporary obstacle is not removed within first preset duration. The control unit is further configured to control, according to the sixth instruction, the display apparatus to switch from displaying the third interface to displaying a fourth interface, where the fourth interface includes second prompt information, and the second prompt information is used to give a prompt that the RPA function is paused.

With reference to the fourth aspect, in some implementations of the fourth aspect, the fourth interface further includes a second control, and the second control is a control for resuming an auto parking function. The sending unit is further configured to send a seventh instruction to the vehicle when the obtaining unit obtains a second input of the user for the second control, where the seventh instruction instructs to resume the RPA function.

According to a fifth aspect, a parking apparatus is provided. The apparatus includes a processing unit and a storage unit. The storage unit is configured to store instructions, and the processing unit executes the instructions stored in the storage unit, so that the apparatus performs the parking method in any possible implementation of the first aspect.

According to a sixth aspect, a parking apparatus is provided. The apparatus includes a processing unit and a storage unit. The storage unit is configured to store instructions, and the processing unit executes the instructions stored in the storage unit, so that the apparatus performs the parking method in any possible implementation of the second aspect.

According to a seventh aspect, a control system is provided. The control system includes the foregoing vehicle and the foregoing mobile terminal.

According to an eighth aspect, this application provides a vehicle. The vehicle includes the apparatus in any possible implementation of the third aspect or the fifth aspect.

According to a ninth aspect, this application provides a mobile terminal. The mobile terminal includes the apparatus in any possible implementation of the fourth aspect or the sixth aspect.

According to a tenth aspect, this application provides a computer program product. The computer program product includes computer program code. When the computer program code is run on a computer, the computer is enabled to perform the parking method in any possible implementation of the first aspect or the second aspect.

It should be noted that all or some of the computer program code may be stored in a first storage medium. The first storage medium may be packaged together with a processor, or may be packaged separately from a processor. This is not specifically limited in embodiments of this application.

According to an eleventh aspect, this application provides a computer-readable medium, where the computer-readable medium stores program code. When the computer program code is run on a computer, the computer is enabled to perform the parking method in any possible implementation of the first aspect or the second aspect.

According to a twelfth aspect, this application provides a chip. The chip includes a circuit, and the circuit is configured to perform the method in any possible implementation of the first aspect or the second aspect.

According to a thirteenth aspect, this application provides a parking method. The method includes: determining a target parking space, where the target parking space is in an occupied state; determining a parking mode, where the parking mode includes enhanced parking assist; and in response to the target parking space being in a vacant state, controlling a vehicle to perform enhanced parking assist into the target parking space.

Based on the foregoing technical solution, when the target parking space is in the occupied state, a user can still select the enhanced parking assist mode. When a status of the target parking space is updated to the vacant state, enhanced parking assist into the target parking space may be performed. In this way, the user does not need to get off the vehicle to remove an obstacle and then get on the vehicle to select enhanced parking assist. This reduces cumbersome operations performed by the user when enhanced parking assist is used, and helps improve parking experience of the user.

In some possible implementations, determining the target parking space includes: receiving a first instruction of the user, where the first instruction indicates the target parking space selected by the user.

In some possible implementations, determining the target parking space includes: determining the target parking space from a plurality of parking spaces based on one or more of a parking distance, parking duration, or a quantity of parking adjustments.

In some possible implementations, determining the target parking space includes: when it is detected that there is a dedicated parking space of the user around the vehicle, determining the dedicated parking space as the target parking space.

In some possible implementations, determining the parking mode includes: receiving a second instruction of the user, where the second instruction instructs the parking mode selected by the user.

In some possible implementations, determining the parking mode includes: determining the parking mode based on the status of the target parking space. For example, when the target parking space is in the occupied state, it may be determined that the parking mode is enhanced parking assist or remote parking assist.

With reference to the thirteenth aspect, in some implementations of the thirteenth aspect, in response to the target parking space being in the vacant state, controlling the vehicle to perform enhanced parking assist into the target parking space includes: in response to determining the parking mode and the target parking space being in the occupied state, controlling the vehicle to output first prompt information, where the first prompt information indicates that enhanced parking assist is incapable of being activated and/or indicates that the user needs to update the status of the target parking space to the vacant state; and in response to the status of the target parking space being updated to the vacant state, controlling the vehicle to be parked into the target parking space.

Based on the foregoing technical solution, when the target parking space is in the occupied state, the vehicle may output the first prompt information. In this way, the user may be prompted to remove the obstacle in the parking space in time, for the vehicle to be parked into the target parking space.

With reference to the thirteenth aspect, in some implementations of the thirteenth aspect, in response to the target parking space being in the vacant state, controlling the vehicle to perform enhanced parking assist into the target parking space includes: in response to determining the parking mode and the target parking space being in the occupied state, controlling the vehicle to travel from a start location to a vicinity of the target parking space and then stop; and in response to the status of the target parking space being updated to the vacant state, controlling the vehicle to be parked into the target parking space.

Based on the foregoing technical solution, when the target parking space is in the occupied state, the vehicle may alternatively activate enhanced parking assist, travel to the vicinity of the target parking space, and then stop. When the status of the target parking space is updated to the vacant state, the vehicle may continue parking into the target parking space.

With reference to the thirteenth aspect, in some implementations of the thirteenth aspect, when the parking mode is determined and the target parking space is in the occupied state, that the vehicle travels from the start location to the vicinity of the target parking space and then stops further includes: controlling the vehicle to output second prompt information, where the second prompt information indicates that the user needs to update the status of the target parking space to the vacant state, and an output manner of the second prompt information includes at least one of the following: blinking of a vehicle light, a sound, or prompt information pushed to a mobile terminal.

Based on the foregoing technical solution, when the vehicle stops when traveling to the vicinity of the target parking space, the second prompt information may be output. In this way, the user may be prompted to remove the obstacle in the parking space in time, for the vehicle to be parked into the target parking space.

With reference to the thirteenth aspect, in some implementations of the thirteenth aspect, before determining the parking mode, the method further includes: receiving an instruction of the user, where the instruction indicates that the user activates parking; and in response to the received instruction, controlling the vehicle to travel from the start location to the vicinity of the target parking space and then stop.

In some possible implementations, receiving the instruction of the user includes: receiving an instruction of the user for selecting APA.

Based on the foregoing technical solution, the user may be allowed to activate parking when the target parking space is in the occupied state. After parking is activated, the vehicle stops when traveling to the vicinity of the target parking space, and may continue to use enhanced parking assist. When the target parking space is in the vacant state, the vehicle may continue enhanced parking assist into the target parking space. In this way, after enhanced parking assist is activated, the vehicle may seamlessly transition to APA to perform parking into the target parking space.

According to a fourteenth aspect, this application provides a parking method. The method includes: determining a target parking space, where the target parking space is in an occupied state; determining a parking mode, where the parking mode includes remote parking assist; and in response to the target parking space being in a vacant state, controlling the vehicle to perform remote parking assist into the target parking space.

Based on the foregoing technical solution, when the target parking space is in the occupied state, a user can still select remote parking assist. When a status of the target parking space is updated to the vacant state, remote parking assist into the target parking space may be performed. In this way, the user does not need to get off the vehicle, remove an obstacle, and then get on the vehicle to select remote parking assist. This reduces cumbersome operations performed by the user when remote parking assist is used, and helps improve parking experience of the user.

With reference to the fourteenth aspect, in some implementations of the fourteenth aspect, in response to the target parking space being in the vacant state, controlling the vehicle to perform remote parking assist into the target parking space includes: in response to determining the parking mode and the target parking space being in the occupied state, controlling the vehicle to output first prompt information, where the first prompt information indicates that remote parking assist is incapable of being activated or indicates that the user needs to update a status of the target parking space to the vacant state; and in response to the status of the target parking space being updated to the vacant state, controlling the vehicle to be parked into the target parking space.

Based on the foregoing technical solution, the vehicle outputs the prompt information, so that the user can be prompted in time to remove the obstacle from the target parking space. When the status of the target parking space is updated to the vacant state, remote parking assist may be activated and the vehicle is controlled to be parked into the target parking space.

With reference to the fourteenth aspect, in some implementations of the fourteenth aspect, controlling the vehicle to output the first prompt information includes: sending a first message to a mobile terminal, where the first message indicates that the target parking space is in the occupied state, and the mobile terminal is configured to give a prompt that remote parking assist is incapable of being activated and/or give the user a prompt that the status of the target parking space needs to be updated to the vacant state.

Based on the foregoing technical solution, the vehicle may send the first message to the mobile terminal, so that the mobile terminal gives the prompt that remote parking assist is incapable of being activated and/or gives the user the prompt that the status of the target parking space needs to be updated to the vacant state. In this way, the user can remove the obstacle in the target parking space in time after seeing the prompt on the mobile terminal, so that the vehicle can be parked into the target parking space as soon as possible.

With reference to the fourteenth aspect, in some implementations of the fourteenth aspect, in response to the target parking space being in the vacant state, controlling the vehicle to perform remote parking assist into the target parking space includes: in response to receiving an instruction sent by a mobile terminal and the target parking space being in the occupied state, controlling the vehicle to travel from a start location to a vicinity of the target parking space and then stop, where the instruction is used by the user to activate remote parking assist on the mobile terminal; and in response to a status of the target parking space being updated to the vacant state, controlling the vehicle to be parked into the target parking space.

Based on the foregoing technical solution, when the target parking space is in the occupied state, after the vehicle receives the instruction sent by the mobile terminal, remote parking assist may be activated, and the vehicle stops when traveling to the vicinity of the target parking space. When the status of the target parking space is updated to the vacant state, remote parking assist into the target parking space may continue to be performed. In this way, when the target parking space is in the occupied state, activating remote parking assist is allowed after the vehicle receives the instruction from the mobile terminal. This helps expand a capability range of remote parking assist.

With reference to the fourteenth aspect, in some implementations of the fourteenth aspect, before receiving a second instruction of the user, the method further includes: receiving another instruction of the user, where the another instruction indicates that the user activates parking; and in response to the received another instruction, controlling the vehicle to travel from the start location to the vicinity of the target parking space and then stop.

In some possible implementations, receiving the another instruction of the user includes: receiving an instruction of the user for selecting APA.

Based on the foregoing technical solution, the user may be allowed to activate parking when the target parking space is in the occupied state. After parking is activated, the vehicle may stop after traveling to the vicinity of the target parking space, and remote parking assist may continue to be used. When the target parking space is in the vacant state, the vehicle may continue remote parking assist into the target parking space. In this way, after remote parking assist is activated, the vehicle may seamlessly transition to APA to perform parking into the target parking space.

According to a fifteenth aspect, this application provides a parking method. The method includes: receiving a first message sent by a vehicle, where the first message indicates that a target parking space is in an occupied state; and in response to the first message, controlling a prompt apparatus to give a prompt that a parking mode is incapable of being activated, and/or give a user a prompt that a status of the target parking space needs to be updated to a vacant state, where the parking mode includes any one of the following: enhanced parking assist and remote parking assist.

With reference to the fifteenth aspect, in some implementations of the fifteenth aspect, the parking mode is remote parking assist, and the method further includes: receiving a second message sent by the vehicle, where the second message indicates that the target parking space is in the vacant state; in response to the second message, controlling a display apparatus to prompt the user to activate remote parking assist; and sending a third message to the vehicle in response to an input of the user for activating remote parking assist, where the third message indicates to activate remote parking assist.

With reference to the fifteenth aspect, in some implementations of the fifteenth aspect, the first message further indicates the vehicle to travel to a vicinity of the target parking space.

With reference to the fifteenth aspect, in some implementations of the fifteenth aspect, before receiving the first message sent by the vehicle, the method further includes: receiving a fourth message sent by the vehicle, where the fourth message indicates that the vehicle is far away from the target parking space; and in response to the fourth message, controlling the prompt apparatus to prompt the user to activate remote parking assist.

With reference to the fifteenth aspect, in some implementations of the fifteenth aspect, the parking mode is enhanced parking assist, and the method further includes: receiving a fifth message sent by the vehicle, where the fifth message indicates that the target parking space is in the vacant state; and in response to the fifth message, controlling the prompt apparatus to give a prompt that enhanced parking assist is activated.

According to a sixteenth aspect, this application provides a parking apparatus. The apparatus includes: a determining unit, configured to determine a target parking space, where the target parking space is in an occupied state, the determining unit is further configured to determine a parking mode, and the parking mode includes enhanced parking assist; and a control unit, configured to: in response to the target parking space being in a vacant state, control a vehicle to perform enhanced parking assist into the target parking space.

With reference to the sixteenth aspect, in some implementations of the sixteenth aspect, the control unit is specifically configured to: in response to determining, by the determining unit, the parking mode and the target parking space being in the occupied state, control the vehicle to output first prompt information, where the first prompt information indicates that enhanced parking assist is incapable of being activated and/or indicates that a user needs to update a status of the target parking space to the vacant state; and in response to the status of the target parking space being updated to the vacant state, control the vehicle to be parked into the target parking space.

With reference to the sixteenth aspect, in some implementations of the sixteenth aspect, the control unit is specifically configured to: in response to determining, by the determining unit, the parking mode and the target parking space being in the occupied state, control the vehicle to travel from a start location to a vicinity of the target parking space and then stop; and in response to a status of the target parking space being updated to the vacant state, control the vehicle to be parked into the target parking space.

With reference to the sixteenth aspect, in some implementations of the sixteenth aspect, the control unit is further configured to control the vehicle to output second prompt information, where the second prompt information indicates that a user needs to update the status of the target parking space to the vacant state, and an output manner of the second prompt information includes at least one of the following: blinking of a vehicle light, a sound, or prompt information pushed to a mobile terminal.

With reference to the sixteenth aspect, in some implementations of the sixteenth aspect, the apparatus further includes a receiving unit, configured to: before the determining unit determines the parking mode, receive an instruction of the user, where the instruction indicates that the user activates parking. The control unit is further configured to: in response to the received instruction, control the vehicle to travel from the start location to the vicinity of the target parking space and then stop.

According to a seventeenth aspect, this application provides a parking apparatus. The apparatus includes: a determining unit, configured to determine a target parking space, where the target parking space is in an occupied state, the determining unit is further configured to determine a parking mode, and the parking mode includes remote parking assist; and a control unit, configured to: in response to the target parking space being in a vacant state, control a vehicle to perform remote parking assist into the target parking space.

With reference to the seventeenth aspect, in some implementations of the seventeenth aspect, the control unit is specifically configured to: in response to determining, by the determining unit, the parking mode and the target parking space being in the occupied state, control the vehicle to output first prompt information, where the first prompt information indicates that remote parking assist is incapable of being activated or indicates that a user needs to update a status of the target parking space to the vacant state; and in response to the status of the target parking space being updated to the vacant state, control the vehicle to be parked into the target parking space.

With reference to the seventeenth aspect, in some implementations of the seventeenth aspect, the control unit is specifically configured to: send a first message to a mobile terminal, where the first message indicates that the target parking space is in the occupied state, and the mobile terminal is configured to give a prompt that remote parking assist is incapable of being activated and/or give the user a prompt that the status of the target parking space needs to be updated to the vacant state.

With reference to the seventeenth aspect, in some implementations of the seventeenth aspect, the control unit is specifically configured to: in response to receiving an instruction sent by a mobile terminal and the target parking space being in the occupied state, control the vehicle to travel from a start location to a vicinity of the target parking space and then stop, where the instruction is used by a user to activate remote parking assist on the mobile terminal; and in response to a status of the target parking space being updated to the vacant state, control the vehicle to be parked into the target parking space.

With reference to the seventeenth aspect, in some implementations of the seventeenth aspect, the apparatus further includes a receiving unit, configured to: before the determining unit determines the parking mode, receive another instruction of the user, where the another instruction indicates that the user activates parking; and in response to the received another instruction, control the vehicle to travel from the start location to the vicinity of the target parking space and then stop.

According to an eighteenth aspect, this application provides a parking apparatus. The apparatus includes: a receiving unit, configured to receive a first message sent by a vehicle, where the first message indicates that a target parking space is in an occupied state; and a control unit, configured to: in response to the first message, control a prompt apparatus to give a prompt that a parking mode is incapable of being activated, and/or give a user a prompt that a status of the target parking space needs to be updated to a vacant state, where the parking mode includes any one of the following: enhanced parking assist and remote parking assist.

With reference to the eighteenth aspect, in some implementations of the eighteenth aspect, the parking mode is remote parking assist. The receiving unit is further configured to receive a second message sent by the vehicle, where the second message indicates that the target parking space is in the vacant state. The control unit is further configured to: in response to the second message, control a display apparatus to prompt the user to activate remote parking assist. The apparatus further includes a sending unit, configured to send a third message to the vehicle in response to an input of the user for activating remote parking assist, where the third message indicates to activate remote parking assist.

With reference to the eighteenth aspect, in some implementations of the eighteenth aspect, the first message further indicates the vehicle to travel to a vicinity of the target parking space.

With reference to the eighteenth aspect, in some implementations of the eighteenth aspect, the receiving unit is further configured to: before receiving the first message, receive a fourth message sent by the vehicle, where the fourth message indicates that the vehicle is far away from the target parking space. The control unit is further configured to: in response to the fourth message, control the prompt apparatus to prompt the user to activate remote parking assist.

With reference to the eighteenth aspect, in some implementations of the eighteenth aspect, the parking mode is enhanced parking assist. The receiving unit is further configured to receive a fifth message sent by the vehicle, where the fifth message indicates that the target parking space is in the vacant state. The control unit is further configured to: in response to the fifth message, control the prompt apparatus to give a prompt that enhanced parking assist is activated.

According to a nineteenth aspect, a parking apparatus is provided. The apparatus includes a processing unit and a storage unit. The storage unit is configured to store instructions, and the processing unit executes the instructions stored in the storage unit, so that the apparatus performs the parking method in any possible implementation of the thirteenth aspect or the fourteenth aspect.

According to a twentieth aspect, a parking apparatus is provided. The apparatus includes a processing unit and a storage unit. The storage unit is configured to store instructions, and the processing unit executes the instructions stored in the storage unit, so that the apparatus performs the parking method in any possible implementation of the fifteenth aspect.

According to a twenty-first aspect, a parking system is provided. The parking system includes a sensor and a computing platform. The computing platform includes the parking apparatus in any possible implementation of the sixteenth aspect, the seventeenth aspect, or the nineteenth aspect.

According to a twenty-second aspect, this application provides a vehicle. The vehicle includes the parking apparatus in any possible implementation of the sixteenth aspect, the seventeenth aspect, or the nineteenth aspect, or includes the parking system in the twenty-first aspect.

According to a twenty-third aspect, this application provides a mobile terminal. The mobile terminal includes the apparatus in any possible implementation of the eighteenth aspect or the twentieth aspect.

According to a twenty-fourth aspect, this application provides a computer program product. The computer program product includes computer program code. When the computer program code is run on a computer, the computer is enabled to perform the parking method in any possible implementation of the thirteenth aspect to the fifteenth aspect.

It should be noted that all or some of the computer program code may be stored in a first storage medium. The first storage medium may be packaged together with a processor, or may be packaged separately from a processor. This is not specifically limited in embodiments of this application.

According to a twenty-fifth aspect, this application provides a computer-readable medium, where the computer-readable medium stores program code. When the computer program code is run on a computer, the computer is enabled to perform the parking method in any possible implementation of the thirteenth aspect to the fifteenth aspect.

According to a twenty-sixth aspect, this application provides a chip. The chip includes a circuit, and the circuit is configured to perform the method in any possible implementation of the thirteenth aspect to the fifteenth aspect.

### BRIEF DESCRIPTION OF DRAWINGS

FIG. 1 is a functional block diagram of a vehicle according to an embodiment of this application;
FIG. 2 is a block diagram of an ADAS according to an embodiment of this application;
FIG. 3 to FIG. 6 are a group of human machine interfaces HMIs according to an embodiment of this application;
FIG. 7 to FIG. 11 are another group of HMIs according to an embodiment of this application;
FIG. 12 and FIG. 13 are another group of HMIs according to an embodiment of this application;
FIG. 14A and FIG. 14B are a schematic flowchart of a parking method according to an embodiment of this application;
FIG. 15A and FIG. 15B are another schematic flowchart of a parking method according to an embodiment of this application;
FIG. 16 is another schematic flowchart of a parking method according to an embodiment of this application;
FIG. 17 is another schematic flowchart of a parking method according to an embodiment of this application;
FIG. 18 is a block diagram of a parking apparatus according to an embodiment of this application;
FIG. 19 is another block diagram of a parking apparatus according to an embodiment of this application;
FIG. 20 is another schematic flowchart of a parking method according to an embodiment of this application;
FIG. 21 to FIG. 24 are another group of HMIs according to an embodiment of this application;
FIG. 25 and FIG. 26 are another group of HMIs according to an embodiment of this application;
FIG. 27 to FIG. 31 are another group of HMIs according to an embodiment of this application;
FIG. 32 to FIG. 34 are another group of HMIs according to an embodiment of this application;
FIG. 35 to FIG. 39 are another group of HMIs according to an embodiment of this application;
FIG. 40 to FIG. 43 are another group of HMIs according to an embodiment of this application;
FIG. 44 is another schematic flowchart of a parking method according to an embodiment of this application;
FIG. 45 is another schematic flowchart of a parking method according to an embodiment of this application;
FIG. 46 is another schematic flowchart of a parking method according to an embodiment of this application;
FIG. 47A and FIG. 47B are another schematic flowchart of a parking method according to an embodiment of this application;
FIG. 48 is a block diagram of a parking apparatus according to an embodiment of this application; and
FIG. 49 is another block diagram of a parking apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and indicates that three relationships may exist. For example, at least one of A and B may indicate the following three cases: Only A exists, both A and B exist, and only B exists.

In embodiments of this application, prefix words such as "first" and "second" are used only to distinguish different described objects, and do not limit a location, a sequence, a priority, a quantity, content, or the like of described objects. In embodiments of this application, use of a prefix word, for example, an ordinal number, used to distinguish described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

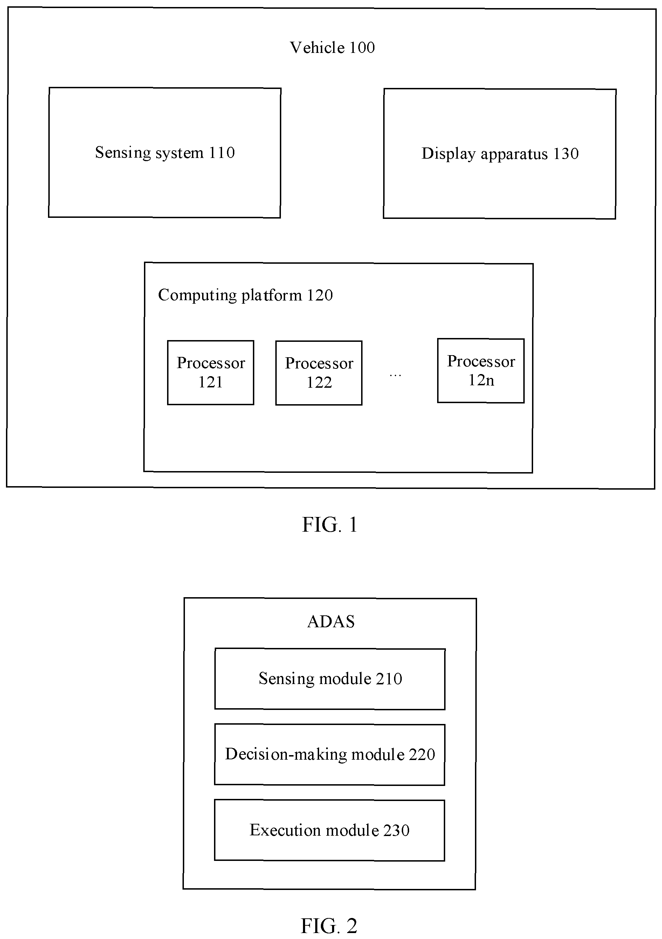

FIG. 1 is a functional block diagram of a vehicle 100 according to an embodiment of this application. The vehicle 100 may include a sensing system 110, a computing platform 120, and a display apparatus 130. The sensing system 110 may include one or more sensors that sense information about an ambient environment of the vehicle 100. For example, the sensing system 110 may include a positioning system. The positioning system may be a global positioning system (global positioning system, GPS), a BeiDou system, or another positioning system. For another example, the sensing system 110 may include one or more of an inertial measurement unit (inertial measurement unit, IMU), an acceleration sensor, a lidar, a millimeter-wave radar, an ultrasonic radar, and a camera apparatus. For example, the acceleration sensor may include a sensor configured to detect an acceleration signal of an air suspension system, or may include a sensor configured to detect an acceleration signal of an ESC.

Some or all functions of the vehicle 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions. Some or all of the processors 121 to 12n may invoke the instructions in the memory, to implement a corresponding function.

The display apparatus 130 in a cockpit is mainly classified into two types. A first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cockpit, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. Head-up display, also referred to as a head-up display system. The head-up display is mainly configured to display driving information such as a speed and navigation on a display device (for example, a windshield) in front of a driver, to reduce line-of-sight transfer time of the driver, avoid a pupil change caused by a line-of-sight transfer of the driver, and improve driving safety and comfort. For example, the HUD includes a combiner-head-up display (combiner-HUD, C-HUD) system, a windshield-head-up display (windshield-HUD, W-HUD) system, and an augmented reality-head-up display (augmented reality-HUD, AR-HUD) system. It should be understood that the HUD may also have another type of system with technology evolution. This is not limited in this application.

The foregoing display apparatus 130 is described by using the vehicle-mounted display and the projection display as an example. Embodiments of this application are not limited thereto. For example, the display apparatus 130 may alternatively be a light display or a projection screen.

The vehicle 100 may include an advanced driver assistant system (advanced driver assistant system, ADAS). The ADAS obtains information around the vehicle through a plurality of types of sensors (including but not limited to the lidar, the millimeter-wave radar, the camera apparatus, the ultrasonic sensor, the global positioning system, and the inertia measurement unit) in the vehicle, and analyzes and processes the obtained information, to implement functions such as obstacle sensing, target recognition, vehicle positioning, route planning, and driver monitoring/reminder. This improves traveling safety, automation, and comfort of the vehicle.

For example, FIG. 2 is a block diagram of an ADAS according to an embodiment of this application. From a perspective of a logical function, the ADAS may include three main functional modules: a sensing module 210, a decision-making module 220, and an execution module 230. The sensing module 210 senses an ambient environment of a vehicle body through a sensor, and inputs corresponding real-time data to the decision-making module 220. The decision-making module 220 makes a corresponding decision based on information obtained by the sensing module 210. After receiving a decision signal from the decision-making module 220, the execution module 230 takes a corresponding action, for example, traveling, lane change, turning, braking, or warning.

The sensing module 210 may be the foregoing sensing system 110, and the decision-making module 220 may be located in the foregoing computing platform 120.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks of monitoring and responding to road conditions at levels L1 to L3 are jointly completed by a driver and a system, and the driver needs to take over a dynamic driving task. Levels L4 and L5 enable the driver to be completely transformed into a passenger. For example, auto parking may include APA, RPA, AVP, and the like. For the APA, the driver does not need to control a steering wheel, but still needs to control a throttle and a brake on a vehicle. For the RPA, the driver outside the vehicle may remotely park the vehicle by using a terminal (for example, a mobile phone). For the AVP, the vehicle may complete parking without the driver. From a perspective of a corresponding autonomous driving level, the APA is approximately at the level L1, the RPA is approximately at the level L2 or L3, and the AVP is approximately at the level L4.

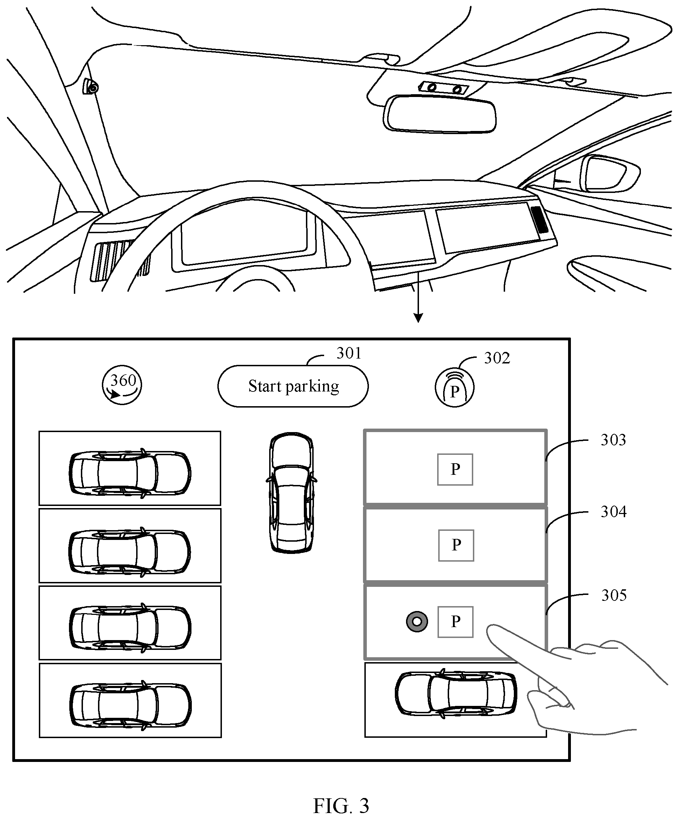

FIG. 3 to FIG. 6 show a group of human machine interfaces (human machine interfaces, HMIs) provided in embodiments of this application.

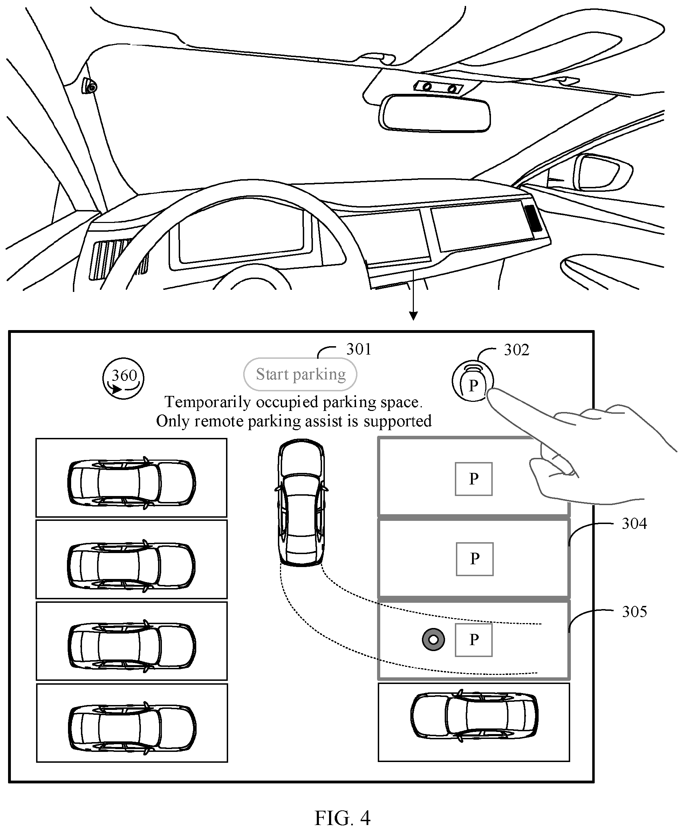

As shown in FIG. 3, a vehicle may recognize a plurality of parking spaces (including parking spaces 303 to 305) based on data collected by a sensor, and may display information about the plurality of parking spaces around the vehicle through a central display. The parking space 303 and a parking space 304 are vacant parking spaces, and the parking space 305 is a parking space occupied by a temporary obstacle (for example, a traffic cone). The HMI further includes a control 301 and a control 302. The control 301 is a control corresponding to an APA function, and the control 302 is a control corresponding to an RPA function. When a tap operation performed by a user on the parking space 305 is detected, the vehicle may display, through the central display, an HMI shown in FIG. 4.

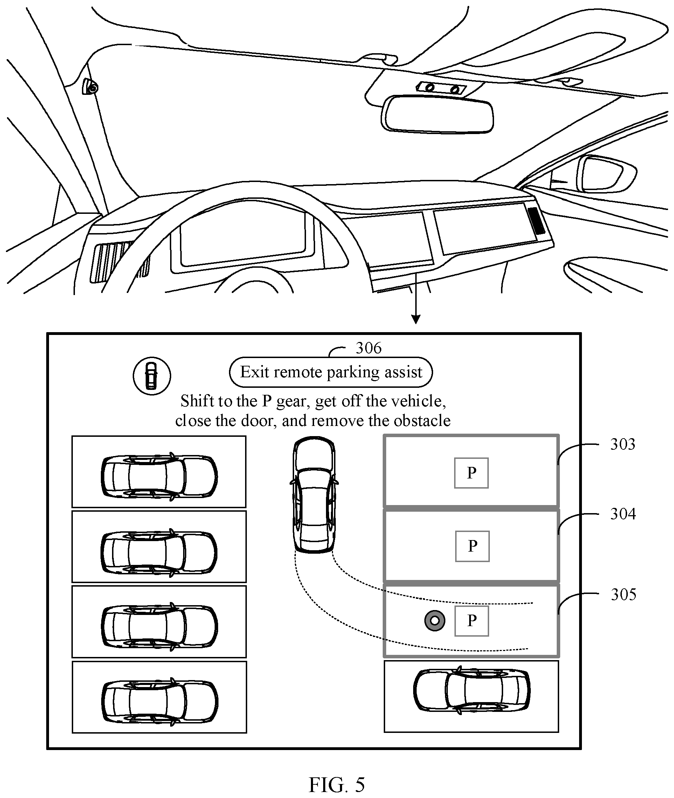

As shown in FIG. 4, in response to detecting the operation that the user taps the parking space 305, the vehicle may display, through the central display, a parking path of parking the vehicle into the parking space 305 from a current location and prompt information "Temporarily occupied parking space. Only remote parking assist is supported". In this case, the control 301 cannot be tapped, and the control 302 can be tapped. Alternatively, the user may choose to control the vehicle to be parked into the parking space 305 by using the RPA function, and the user cannot choose to control the vehicle to be parked into the parking space 305 through the APA function. When a tap operation performed by the user on the control 302 is detected, the vehicle may display, through the central display, an HMI shown in FIG. 5.

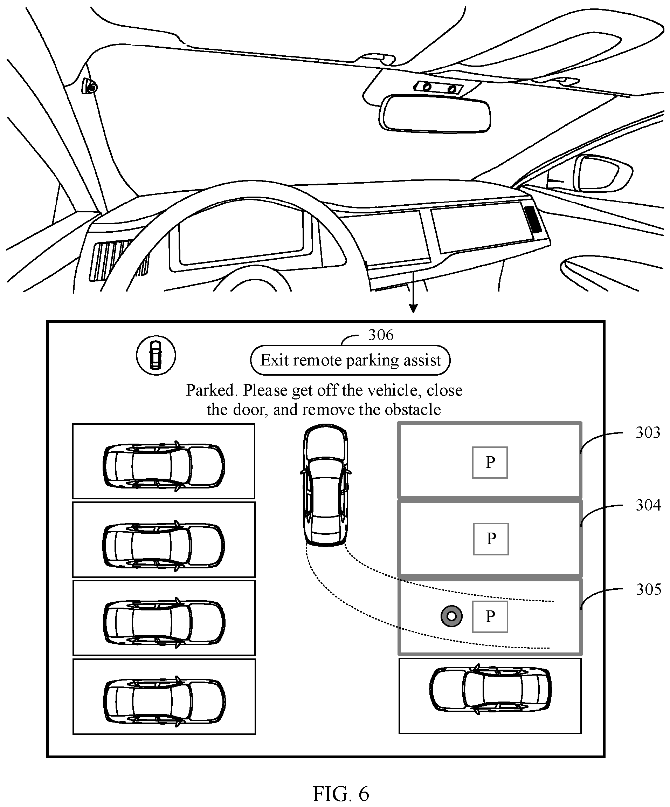

As shown in FIG. 5, in response to detecting the operation that the user taps the control 302, the vehicle may display prompt information "Shift to the P gear, get off the vehicle, close the door, and remove the obstacle" through the central display. In this case, a 360° surround view and a control 306 may be displayed on the HMI, and the control 306 is a control for exiting remote parking assist. When an operation that the user adjusts a gear to a parking gear (the P gear) is detected, the vehicle may display, through the central display, an HMI shown in FIG. 6.

As shown in FIG. 6, in response to detecting the operation that the user adjusts the gear to the P gear, the vehicle may display prompt information "Parked. Please get off the vehicle, close the door, and remove the obstacle" through the central display.

Based on the foregoing technical solution, the vehicle may recognize the parking space occupied by the temporary obstacle, or the parking space occupied by the temporary obstacle is in a released state. The user may select the parking space occupied by the temporary obstacle as a target parking space and choose to park the vehicle by using the RPA function. In this way, the user does not need to get off the vehicle to remove the temporary obstacle and then get on the vehicle to park the vehicle into the parking space by using the RPA function. This avoids cumbersome operations performed by the user in a process of using the RPA function, and helps improve parking experience of the user.

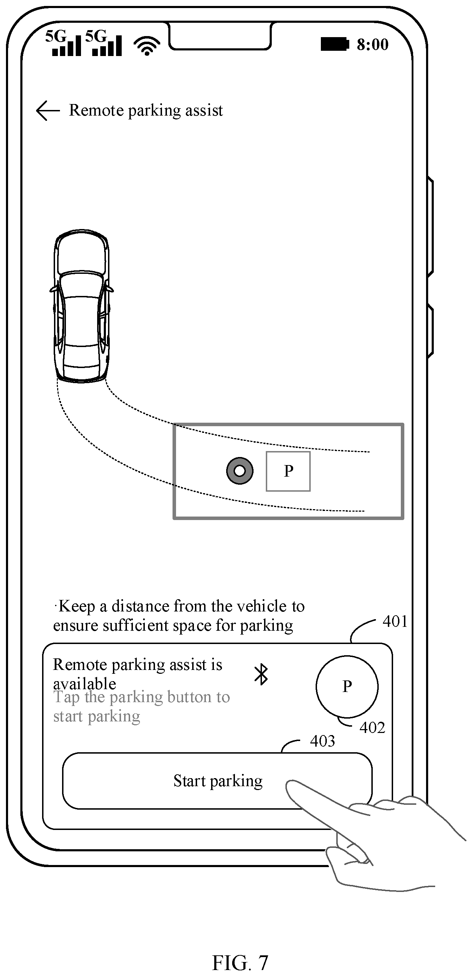

The foregoing describes an HMI display process on a vehicle side with reference to FIG. 3 to FIG. 6. The following describes an HMI display process on a mobile terminal side (for example, a mobile phone) with reference to FIG. 7 to FIG. 13.

When detecting the operation that the user taps the control 302, the vehicle may send an instruction 1 to the mobile phone. The instruction 1 instructs to park the vehicle by using the RPA function. When receiving the instruction 1 sent by the vehicle, the mobile phone may display an HMI shown in FIG. 7.

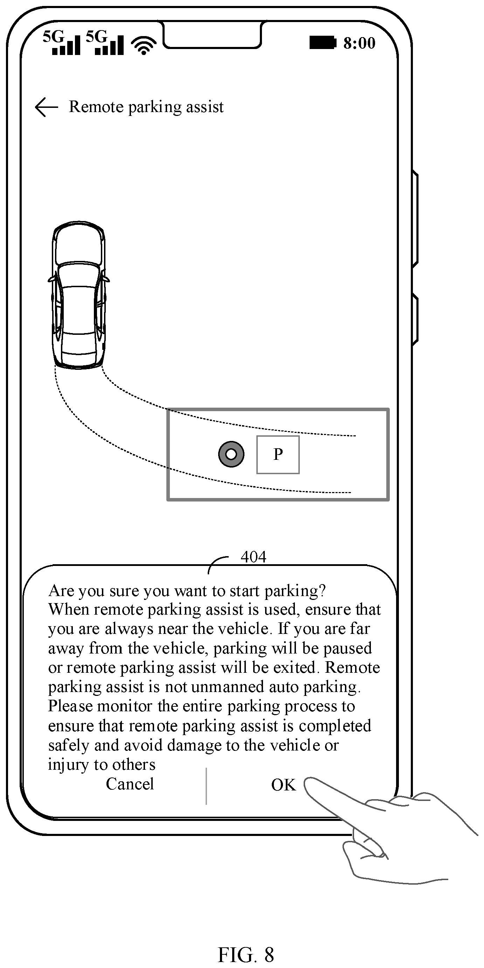

As shown in FIG. 7, the mobile phone may display a display interface 1 of remote parking assist. The display interface 1 includes location information of the vehicle and the parking space 305, a parking path, prompt information "Keep a distance from the vehicle to ensure sufficient space for parking", and a prompt box 401. The prompt box 401 includes prompt information "Remote parking assist is available. Tap the parking button to start parking", gear information 402 (for example, the vehicle is in the P gear in this case), and a control 403. The control 403 is a control for starting parking. When detecting an operation that the user taps the control 403, the mobile phone may display an HMI shown in FIG. 8.

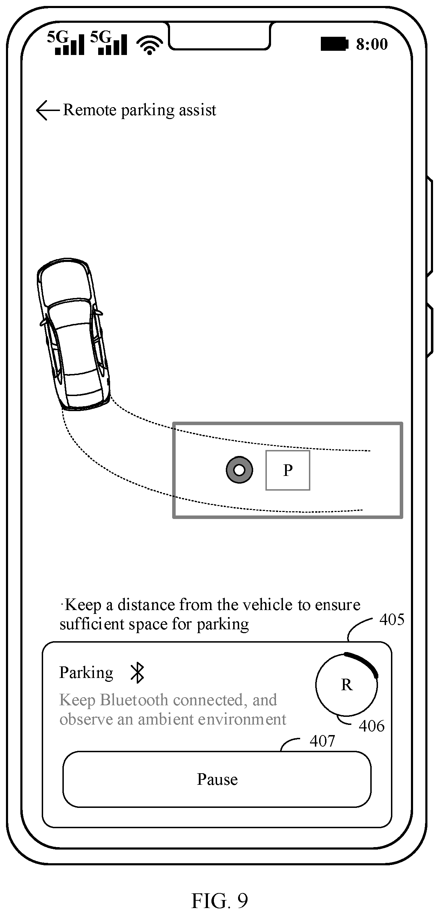

As shown in FIG. 8, in response to detecting the operation that the user taps the control 403, the mobile phone may display a display interface 2 of remote parking assist. The display interface 2 includes a prompt box 404. The prompt box 404 includes prompt information "Are you sure you want to start parking? When remote parking assist is used, ensure that you are always near the vehicle. If you are far away from the vehicle, parking will be paused or remote parking assist will be exited. Remote parking assist is not unmanned auto parking. Please monitor the entire parking process to ensure that remote parking assist is completed safely and avoid damage to the vehicle or injury to others", a cancel control, and an OK control. When detecting an operation that the user taps the OK control, the mobile phone may send an instruction 2 to the vehicle and display an HMI shown in FIG. 9. The instruction 2 may indicate the vehicle to enable the RPA function.

In an embodiment, when receiving the instruction 2, the vehicle may switch the gear to an R gear and start to perform auto parking.

As shown in FIG. 9, in response to detecting the operation that the user taps the OK control, the mobile phone may display a display interface 3 of remote parking assist. The display interface 3 includes a prompt box 405. The prompt box 405 includes prompt information "Parking. Keep Bluetooth connected, and observe an ambient environment", gear information 406 (for example, the vehicle is in the R gear in this case), and a pause control 407.

In an embodiment, the mobile phone may further receive parking information sent by the vehicle in real time. The parking information includes information about the vehicle and the parking space 305. The mobile phone may display a process of parking the vehicle into the parking space 305 based on the parking information sent by the vehicle.

In a process in which the vehicle enables the RPA function for parking into the parking space 305, the vehicle may perform real-time detection on the surrounding environment. When detecting that a distance between the vehicle and the traffic cone is less than or equal to a preset distance, the vehicle may send an instruction 3 to the mobile phone. The instruction 3 may indicate that the distance between the vehicle and the traffic cone is less than or equal to the preset distance.

For example, the preset distance may be 30 cm.

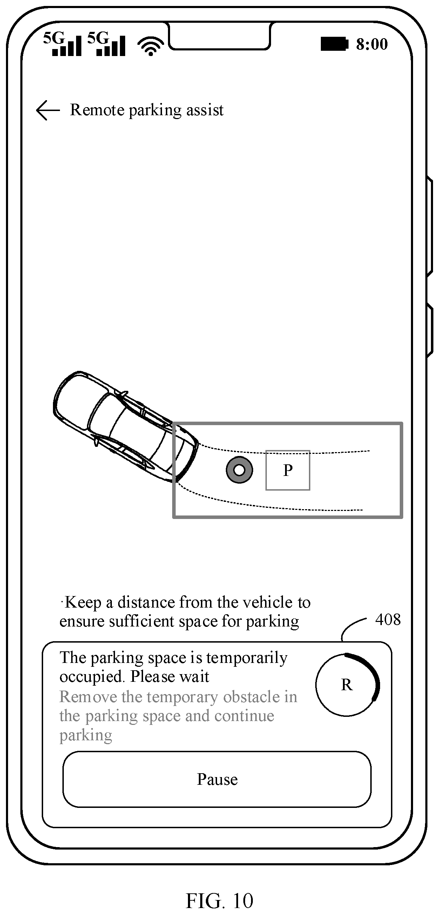

As shown in FIG. 10, in response to receiving the instruction 3, the mobile phone may display a display interface 4 of remote parking assist. The display interface 4 includes a prompt box 408. The prompt box 408 includes prompt information "The parking space is temporarily occupied. Please wait. Remove the temporary obstacle in the parking space and continue parking", gear information (for example, the vehicle is in the R gear in this case), and a pause control.

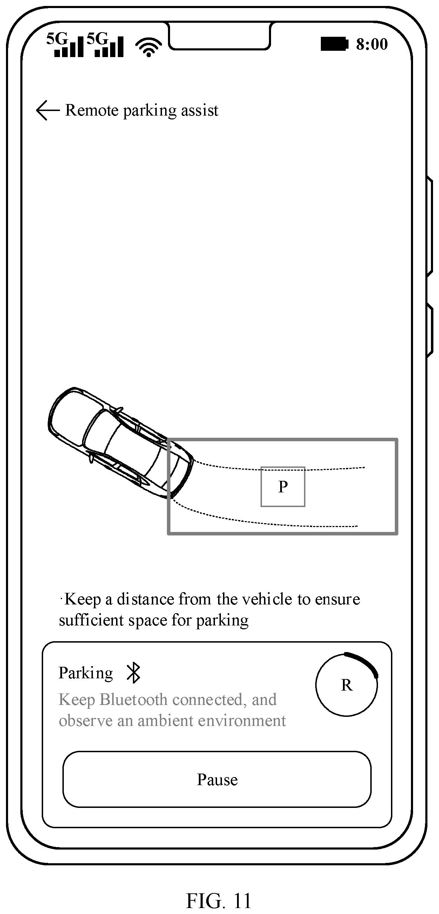

The display interface 4 shown in FIG. 10 may also be referred to as a remote parking assist waiting interface. For example, after receiving the instruction 3, the mobile phone may start a timer 1 (for example, duration of the timer 1 is 15s). If the mobile phone receives, during running of the timer 1, an instruction 4 sent by the vehicle, the mobile phone may automatically switch to a display interface 3 shown in FIG. 11. The instruction 4 indicates that the temporary obstacle is removed from the parking space 305. Therefore, the mobile phone continues to display a process of auto parking of the vehicle into the parking space 305.

The duration of the timer 1 may also be referred to as waiting duration.

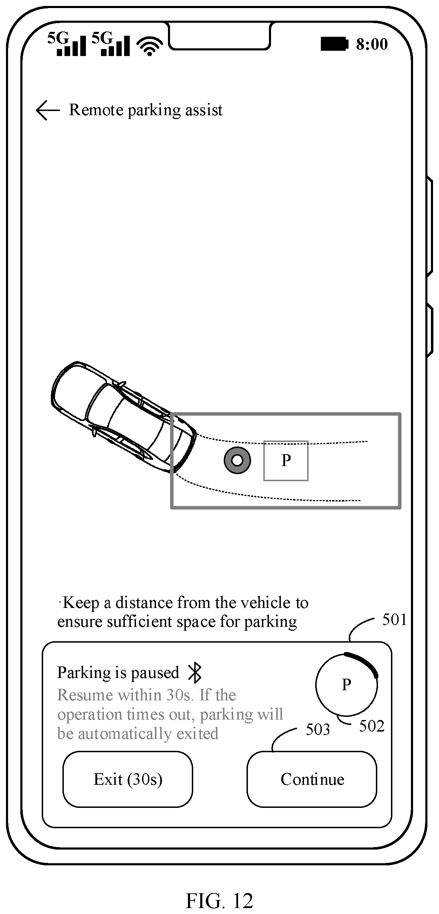

As shown in FIG. 12, when the timer 1 ends, the mobile phone receives no instruction 4 or the mobile phone receives an instruction 5 sent by the vehicle. In this case, the mobile phone may switch to displaying a display interface 5 of remote parking assist shown in FIG. 12. The instruction 5 indicates that the RPA function is paused, or the instruction 5 indicates that the temporary obstacle is not removed within the waiting duration and the gear of the vehicle is switched from the R gear to the P gear.

The display interface 5 includes a prompt box 501. The prompt box 501 includes prompt information "Parking is paused. Resume within 30s. If the operation times out, parking will be automatically exited", gear information (for example, the vehicle is in the P gear in this case), an exit control, and a continue control 503.

For example, when sending the instruction 3 to the mobile phone, the vehicle may also start the timer 1, and detect whether the traffic cone is removed from the parking space 305 during running of the timer 1. If it is detected that the traffic cone is removed during running of the timer 1, the vehicle may continue to perform the RPA function. If it is not detected that the traffic cone is removed when running of the timer 1 ends, the vehicle may control the gear to be switched from the R gear to the P gear, and send the instruction 5 to the mobile phone.

The display interface 5 shown in FIG. 12 may also be referred to as a remote parking assist pause interface. If the mobile phone does not receive the instruction 4 when running of the timer 1 ends, the mobile phone may switch to displaying the remote parking assist pause interface and start a timer 2 (for example, duration of the timer 2 is 30s). During running of the timer 2, when detecting an operation that the user taps the continue control 503, the mobile phone may send an instruction 6 to the vehicle. The instruction 6 instructs the vehicle to continue to perform the RPA function. In response to receiving the instruction 6, the vehicle may detect an obstacle in the parking space 305. If there is no temporary obstacle in the parking space 305, the vehicle may continue to perform the RPA function and send an instruction 7 to the mobile phone. The instruction 7 instructs the vehicle to continue to perform the RPA function. In response to receiving the instruction 7, the mobile phone may switch to displaying the display interface 3 of remote parking assist.

The running duration of the timer 2 may also be referred to as pause duration.

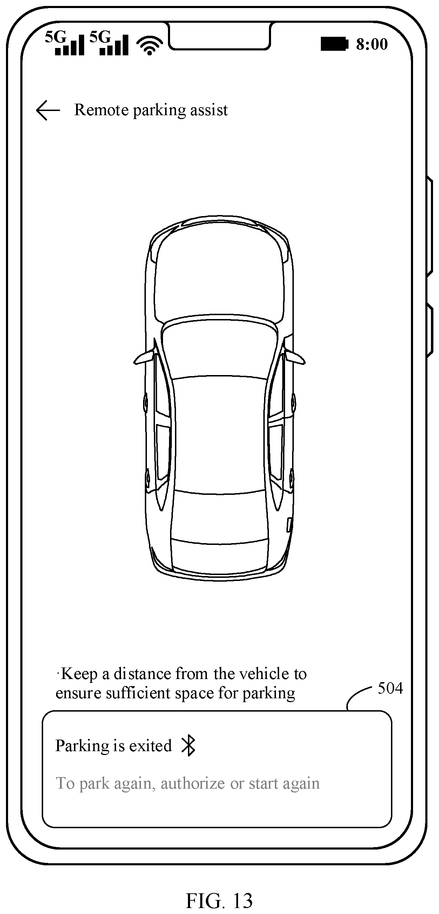

If it is not detected, when running of the timer 2 ends, that the user taps the continue control 503, the mobile phone may display an HMI shown in FIG. 13.

As shown in FIG. 13, the mobile phone may display a display interface 6 of remote parking assist, the display interface 6 includes a prompt box 504, and the prompt box 504 includes prompt information "Parking is exited. To park again, authorize or start again". In this case, if the user wants to continue to use the RPA function, the user may get on the vehicle again and select a target parking space through the central display.

In an embodiment, when running of the timer 1 ends, if the vehicle detects that the temporary obstacle is not removed, the vehicle may start the timer 2. When running of the timer 2 ends, if the vehicle does not receive the instruction 6 sent by the mobile phone, the vehicle may exit the RPA function.

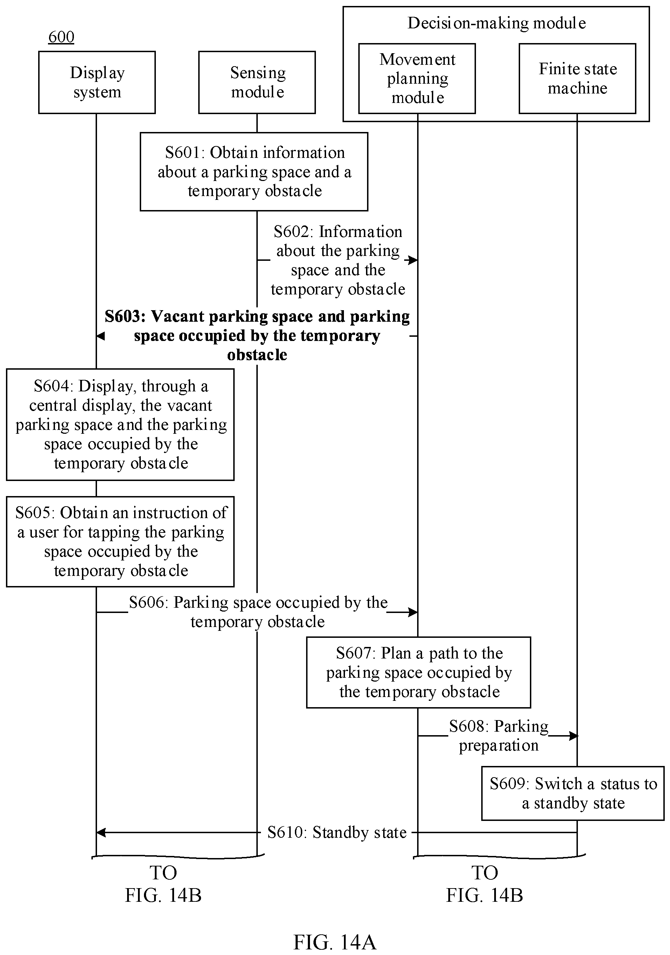

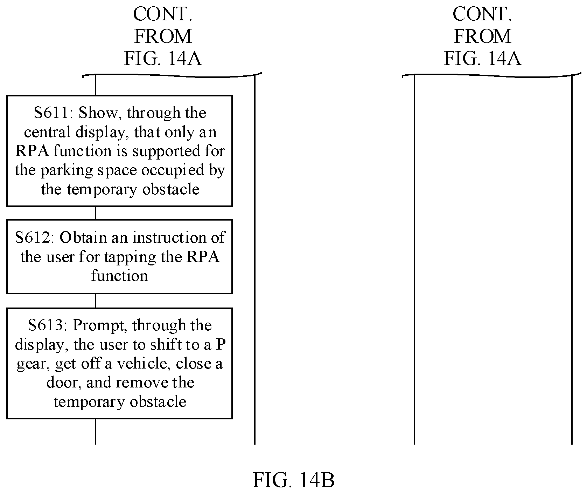

FIG. 14A and FIG. 14B are a schematic flowchart of a parking method 600 according to an embodiment of this application. The method 600 may be performed by a vehicle, or may be performed by a display system and an ADAS in a vehicle. The method 600 includes the following steps.

S601: A sensing module obtains information about a parking space and a temporary obstacle.

Optionally, that the sensing module obtains the information about the parking space and the temporary obstacle includes: When the vehicle is in a parking lot and a speed of the vehicle is less than or equal to a preset speed, the sensing module obtains the information about the parking space and the temporary obstacle.

For example, the preset speed is 20 km/h.

For example, the temporary obstacle may include a traffic cone, a parking barrier, a motorcycle, a non-motor vehicle (for example, a bicycle), a user, and the like.

S602: The sensing module sends the information about the parking space and the temporary obstacle to a movement planning module.

For example, as shown in FIG. 3, the sensing module may send information about a plurality of parking spaces around the vehicle and information about the temporary obstacle to the movement planning module. For example, the plurality of parking spaces include the parking space 303 to the parking space 305, where the parking space 303 and the parking space 304 are vacant parking spaces, and the parking space 305 is a parking space occupied by the temporary obstacle.

For example, when receiving the information about the parking space and the temporary obstacle, the movement planning module may pre-plan a parking path for parking the vehicle from a current location to the parking space occupied by the temporary obstacle.

S603: The movement planning module sends information about the vacant parking space and the parking space occupied by the temporary obstacle to the display system.

For example, the display system may include a parking application of the vehicle and a central display.

For example, the movement planning module sends the information about the parking space 303 to the parking space 305 and the information about the traffic cone to the display system.

S604: The display system may display, through the central display, the vacant parking space and the parking space occupied by the temporary obstacle.

For example, as shown in FIG. 3, the vehicle may display the parking space 303 to the parking space 305 through the display, where the parking space 303 and the parking space 304 are the vacant parking spaces, and the parking space 305 is the parking space occupied by the temporary obstacle.

S605: The display system obtains an instruction of the user for tapping the parking space occupied by the temporary obstacle.

For example, as shown in FIG. 3, the display system may obtain an operation that the user taps the parking space 305.

S606: The display system sends information about the parking space occupied by the temporary obstacle to the movement planning module.

S607: The movement planning module plans a parking path to the parking space occupied by the temporary obstacle.

For example, the movement planning module may plan a parking path from the current location of the vehicle to the parking space 305, and the movement planning module may send the parking path to the display system, so that the display system may display the parking path from the current location of the vehicle to the parking space 305. For example, as shown in FIG. 4, the vehicle may display the parking path.

For example, the movement planning module may obtain the parking path according to a path planning algorithm like a geometric method or a mixed A* algorithm.

S608: The movement planning module sends parking preparation information to a finite state machine.

S609: The finite state machine switches a status of the vehicle to a standby (standby) state based on the parking preparation information sent by the movement planning module.

S610: The finite state machine sends the standby state to the display system.

S611: In response to receiving the standby state, the display system may show, through the central display, that only an RPA function is supported for the parking space occupied by the temporary obstacle.

For example, as shown in FIG. 4, the display system may show, through the central display, that only the RPA function is supported for the parking space 305 (the control 302 may be tapped, and the control 301 cannot be tapped).

S612: The display system obtains an instruction of the user for enabling the RPA function.

For example, as shown in FIG. 4, when detecting an operation that the user taps the control 302, the display system obtains the instruction of the user for enabling the RPA function.

Optionally, when obtaining the instruction of the user for enabling the RPA function, the display system may send an instruction 1 to the mobile phone. When receiving the instruction 1, the mobile phone may display the display interface 1 of remote parking assist.

S613: The display system prompts, through the central display, the user to shift to a P gear, get off the vehicle, close a door, and remove the temporary obstacle.

For example, as shown in FIG. 5, when detecting the operation that the user taps the control 302, the display system may display prompt information "Shift to the P gear, get off the vehicle, close the door, and remove the obstacle" through the central display.

For example, when detecting an operation that the user shifts a gear of the vehicle to the P gear, an execution module (not shown in FIG. 14A and FIG. 14B) may send gear information to the display system. After receiving information indicating that the gear of the vehicle is in the P gear, the display system may give, through the central display, the user a prompt that the vehicle is parked, and the user needs to get off the vehicle, close the door, and remove the temporary obstacle.

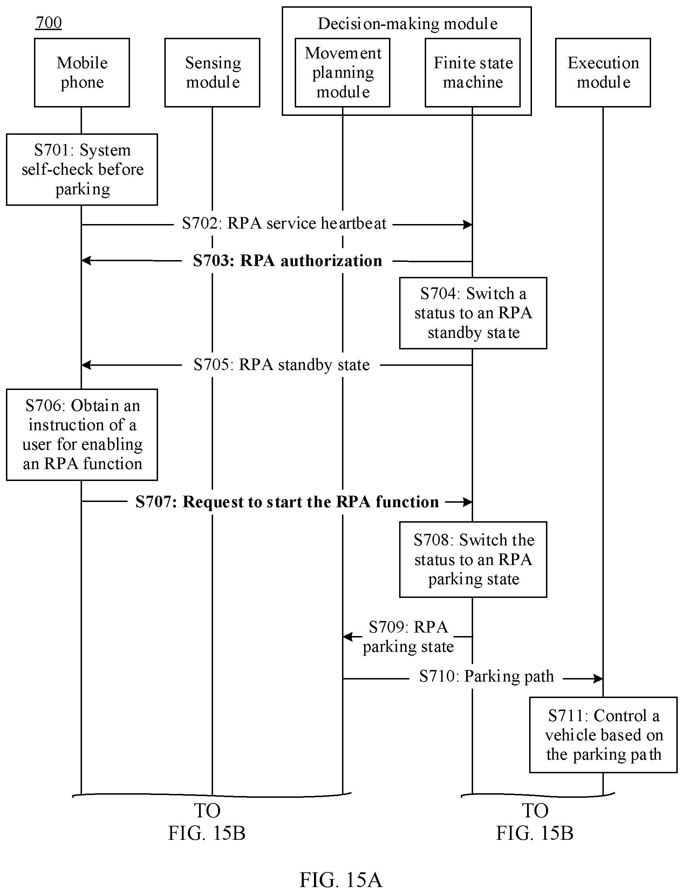

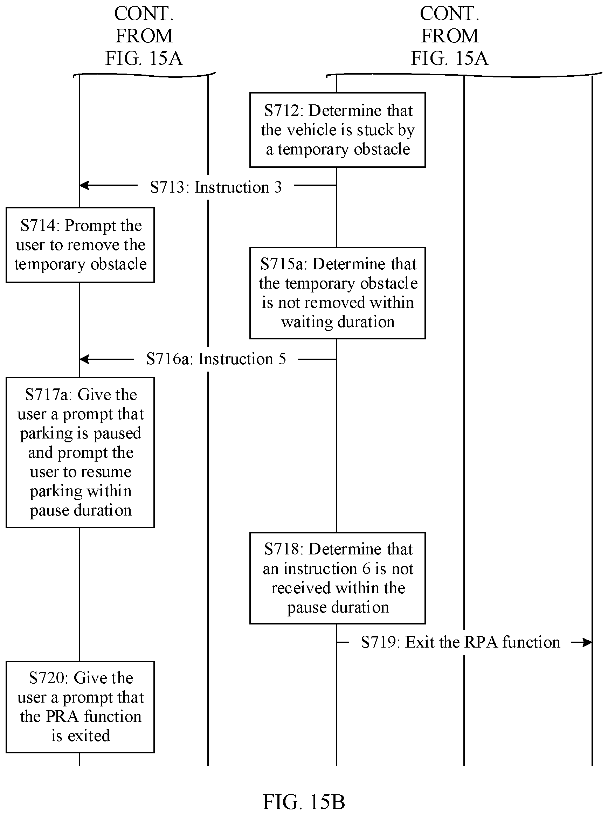

FIG. 15A and FIG. 15B are a schematic flowchart of a parking method 700 according to an embodiment of this application. As shown in FIG. 15A and FIG. 15B, the method 700 may be performed by a mobile phone and a vehicle. The method 700 includes the following steps.

S701: The mobile phone performs system self-check before parking.

S702: The mobile phone sends an RPA service heartbeat to a finite state machine.

S703: The finite state machine sends RPA authorization to the mobile phone.

S704: The finite state machine switches a status of the vehicle to an RPA standby state.

S705: The finite state machine sends the RPA standby state to the mobile phone.

For example, when receiving the RPA standby state and the RPA authorization, the mobile phone may display the display interface 1 of remote parking assist shown in FIG. 7.

S706: The mobile phone obtains an instruction of the user for enabling an RPA function.

For example, as shown in FIG. 8, when detecting an operation that the user taps the OK control, the mobile phone obtains the instruction of the user for enabling the RPA function.

S707: The mobile phone requests the finite state machine to start the RPA function.

S708: The finite state machine switches the status of the vehicle to an RPA parking state.

S709: The finite state machine sends the RPA parking state to a movement planning module.

S710: The movement planning module sends a parking path to an execution module.

For example, the movement planning module may send the parking path obtained through planning in S607 to the execution module.

S711: The execution module controls the vehicle based on the parking path.

For example, the executor may include a steering system, a braking system, and the like.

S712: The movement planning module determines that the vehicle is stuck by a temporary obstacle.

For example, in a process of parking the vehicle into the parking space 305, a sensing module may sense an ambient environment in real time. If it is detected that a distance between the vehicle and the temporary obstacle in the parking space 305 is less than or equal to a preset distance, indication information 1 may be sent to the movement planning module. The indication information 1 indicates that the distance between the vehicle and the temporary obstacle is less than or equal to the preset distance. The movement planning module may determine, based on the indication information 1, that the vehicle is stuck by the temporary obstacle, and send indication information 2 to the execution module. The indication information 2 indicates the execution module to control the vehicle to stop.

S713: The movement planning module sends an instruction 3 to the mobile phone.

S714: In response to receiving the instruction 3, the mobile phone may prompt the user to remove the temporary obstacle.

For example, as shown in FIG. 10, in response to receiving the instruction 3, the mobile phone may display the display interface 4 of remote parking assist. The display interface 4 includes the prompt box 408. The prompt box 408 includes the prompt information "The parking space is temporarily occupied. Please wait. Remove the temporary obstacle in the parking space and continue parking".

S715a: The movement planning module determines that the temporary obstacle is not removed within waiting duration.

S716a: The movement planning module sends an instruction 5 to the mobile phone.

S717a: In response to receiving the instruction 5, the mobile phone gives the user a prompt that parking is paused and prompts the user to resume parking within pause duration.

For example, as shown in FIG. 12, when the waiting duration ends, the mobile phone does not receive the instruction 4, or the mobile phone receives the instruction 5. The mobile phone may switch to displaying the display interface 5 of remote parking assist. The display interface 5 includes the prompt box 501. The prompt box 501 includes the prompt information "Parking is paused. Resume within 30s. If the operation times out, parking will be automatically exited".

S718: The movement planning module determines that the instruction 6 is not received within the pause duration.

S719: The movement planning module indicates the execution module to exit the RPA function.

S720: When the mobile phone does not detect, within the pause duration, that the user taps a control for continuing the RPA function or detects that the user taps a control for exiting the RPA function, the mobile phone gives the user a prompt that the RPA function is exited.

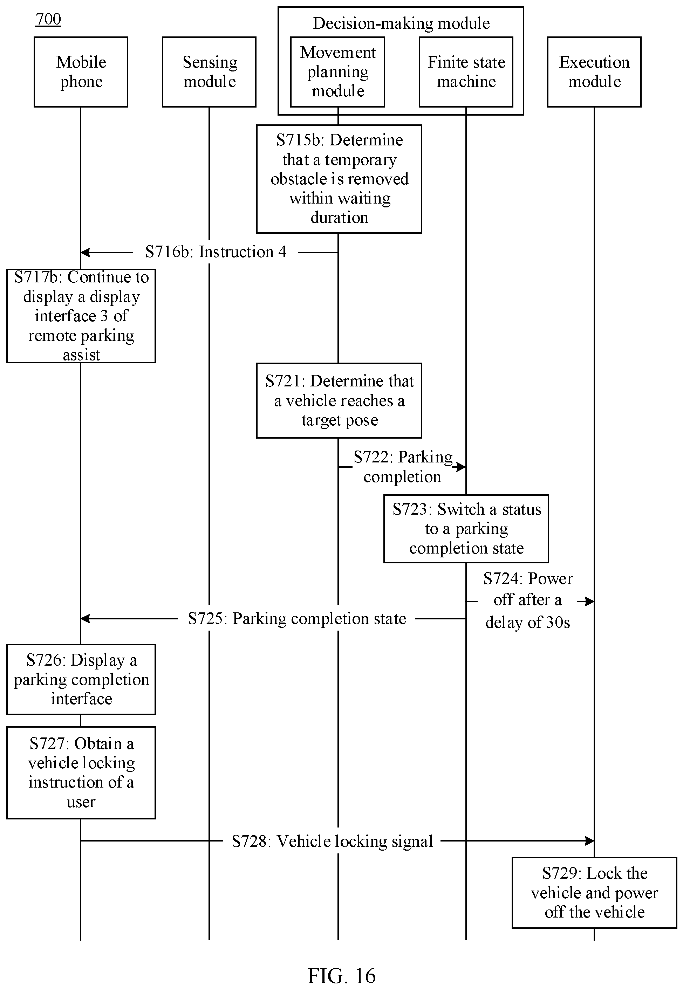

The above about FIG. 15A and FIG. 15B describes a process of interaction between the mobile phone and the vehicle when the temporary obstacle is not removed within the waiting duration and the pause duration. The following describes, with reference to FIG. 16, a process of interaction between the mobile phone and the vehicle when the temporary obstacle is removed within the waiting duration.

FIG. 16 is another schematic flowchart of a parking method 700 according to an embodiment of this application. As shown in FIG. 16, the method 700 may be performed by the mobile phone and the vehicle. The method 700 includes the following steps.

S715b: The movement planning module determines that the temporary obstacle is removed within the waiting duration.

S716b: The movement planning module sends an instruction 4 to the mobile phone.

S717b: In response to receiving the instruction 4, the mobile phone may continue to display a display interface 3 of remote parking assist.

As shown in FIG. 11, within the waiting duration, if the mobile phone receives the instruction 4 sent by the vehicle, the mobile phone may continue to display the display interface 3.

S721: The movement planning module determines that the vehicle reaches a target pose.

S722: The movement planning module sends parking completion information to the finite state machine.

S723: The finite state machine switches the status of the vehicle to a parking completion state.

S724: The finite state machine indicates the execution module to power off after a delay of 30s.

During powering off after the delay of 30, the user may further control the vehicle through the mobile phone. For example, the user may control the vehicle to be parked in the center of the parking space 305.

S725: The finite state machine sends the parking completion state to the mobile phone.

S726: In response to receiving the parking completion state, the mobile phone may display a parking completion interface, where the parking completion interface includes a lock control.

S727: Obtain a vehicle locking instruction of the user.

S728: The mobile phone sends a vehicle locking signal to the execution module.

S729: In response to receiving the vehicle locking signal, the execution module may control the vehicle to be locked.

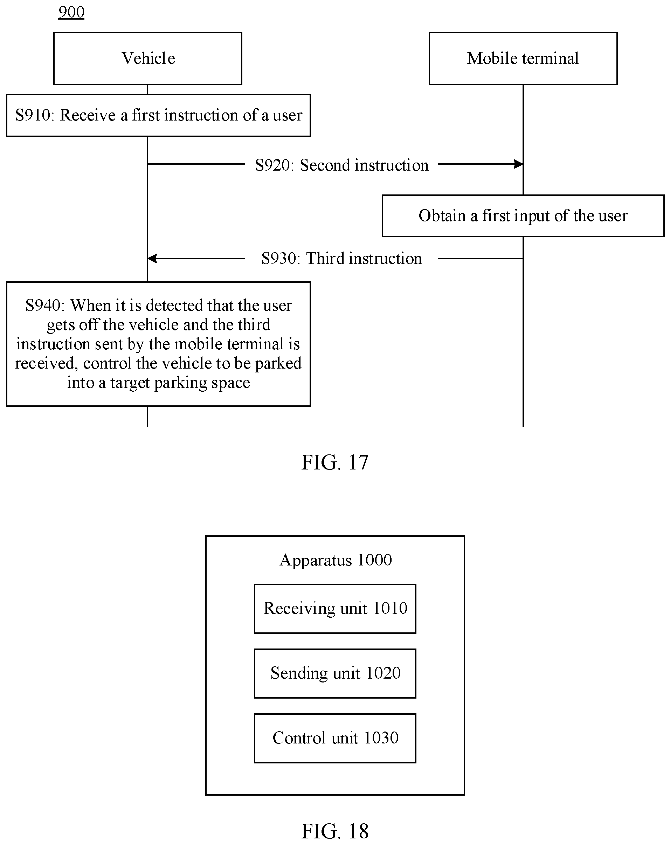

FIG. 17 is a schematic flowchart of a parking method 900 according to an embodiment of this application. The method 900 may be implemented by a vehicle and a mobile terminal. The method 900 includes the following steps.

S910: The vehicle receives a first instruction from a user, where the first instruction instructs to park into a target parking space by using a remote parking assist RPA function, and a temporary obstacle is placed in the target parking space.

For example, the temporary obstacle includes but is not limited to a traffic cone, a parking barrier, a motorcycle, an electric vehicle, a non-motor vehicle (for example, a bicycle), a user, and the like.

Optionally, before the vehicle receives the first instruction of the user, the method 900 further includes: obtaining information about one or more parking spaces, where the one or more parking spaces include the target parking space; and when receiving a fourth instruction of the user, controlling a prompt apparatus to give a prompt that the temporary obstacle is placed in the target parking space and only the RPA function is supported for the target parking space, where the fourth instruction is an instruction of the user for selecting the target parking space.

For example, as shown in FIG. 3, the one or more parking spaces may include a vacant parking space (for example, the parking space 303 and the parking space 304) and a parking space (for example, the parking space 305) occupied by the temporary obstacle. When detecting an operation that the user selects the control 302, the vehicle may give the user a prompt that the temporary obstacle is placed in the parking space 305 and that only the RPA function is supported for the parking space 305.

As shown in FIG. 4, the first instruction may be an operation that the user taps the control 302 through the central display, or may be a voice instruction of the user, for example, "Use remote parking assist to park into a memorized parking space" (for example, the parking space 305 may be a parking space in which the vehicle is previously parked).

As shown in FIG. 3, the fourth instruction may be an operation that the user taps the parking space 305 through the central display, or may be a voice instruction of the user, for example, "Select a memorized parking space".

Optionally, the vehicle may display the vacant parking space and the parking space occupied by the temporary obstacle differently through the central display.

For example, the vacant parking space may be presented in dark blue, and the parking space occupied by the temporary obstacle may be presented in light blue.

For another example, a recommendation degree of a parking space may be presented in the vacant parking space and the parking space occupied by the temporary obstacle. For example, a recommendation degree of the parking space 303 is 80%, a recommendation degree of the parking space 304 is 90%, and a recommendation degree of the parking space 305 is 70%.

S920: In response to receiving the first instruction, the vehicle sends a second instruction to the mobile terminal, and controls the prompt apparatus to prompt the user to get off a vehicle and remove the temporary obstacle, where the second instruction instructs to park into the target parking space by using the RPA function.

The second instruction may be the instruction 1 described above.

For example, as shown in FIG. 5, when detecting the operation that the user taps the control 302, the vehicle may display the prompt information "Shift to the P gear, get off the vehicle, close the door, and remove the obstacle" through the central display.

Optionally, the method 900 further includes: The vehicle may periodically send information about the vehicle and the target parking space to the mobile terminal. In this way, the mobile phone may display, through a display, a movement process of the vehicle along a parking path and information about the target parking space.

S930: When obtaining a first input of the user, the mobile terminal sends a third instruction to the vehicle, where the third instruction instructs the vehicle to start parking into the target parking space.

Optionally, that when obtaining the first input of the user, the mobile terminal sends the third instruction to the vehicle includes: controlling, according to the second instruction, a display apparatus to display a first interface, where the first interface includes a first control, and the first control is a control for enabling the RPA function; and when obtaining the first input of the user for the first control, sending the third instruction to the vehicle, where the third instruction instructs the vehicle to start parking into the target parking space.

For example, the first interface may be the display interface 1 shown in FIG. 7.

Optionally, when obtaining the second instruction sent by the vehicle, the mobile phone may automatically switch from a current display interface to the display interface 1 of remote parking assist.

The third instruction may be the instruction 2.

S940: When it is detected that the user gets off the vehicle and the third instruction sent by the mobile terminal is received, control the vehicle to be parked into the target parking space.

For example, as shown in FIG. 8, when detecting an operation that the user taps the OK control, the mobile phone may send the third instruction to the vehicle, so that the vehicle may perform auto parking into the parking space 305 by using the RPA function.

Optionally, the method 900 further includes: when obtaining the first input of the user for the first control, controlling the display apparatus to switch from displaying the first interface to displaying a second interface, where the second interface is a display interface of parking the vehicle into the target parking space.

For example, the second interface may be the display interface 3 shown in FIG. 9.

Optionally, the method 900 further includes: when a distance between the vehicle and the temporary obstacle is less than or equal to a preset distance, the vehicle stops parking into the target parking space, and sends a fifth instruction to the mobile terminal, where the fifth instruction instructs the mobile terminal to prompt the user to remove the temporary obstacle; and the mobile phone controls, according to the fifth instruction, the display apparatus to switch from displaying the second interface to displaying a third interface, where the third interface includes first prompt information, and the first prompt information is used to prompt the user to remove the temporary obstacle.

The fifth instruction may be the instruction 3.

For example, the third interface may be the display interface 4 shown in FIG. 10.

For example, as shown in FIG. 10, in response to receiving the instruction 3, the mobile phone may display the display interface 4 of remote parking assist through the display. The display interface 4 includes the prompt box 408. The prompt box 408 includes prompt information "The parking space is temporarily occupied. Please wait. Remove the temporary obstacle in the parking space and continue parking", the gear information (for example, the vehicle is in the R gear in this case), and the pause control.

Optionally, the method 900 further includes: When it is detected that the user removes the temporary obstacle within first preset duration, the vehicle continues to perform the RPA function, or the vehicle continues to be controlled for parking into the target parking space.

Optionally, the method 900 further includes: The vehicle sends a sixth instruction to the mobile terminal when it is not detected that the user removes the temporary obstacle within first preset duration, where the sixth instruction indicates that the temporary obstacle is not removed within the first preset duration, or the sixth instruction indicates that the RPA function is paused.

Optionally, the method 900 further includes: The mobile terminal controls, according to the sixth instruction, the display apparatus to switch from displaying the third interface to displaying a fourth interface, where the fourth interface includes second prompt information, and the second prompt information is used to give a prompt that the RPA function is paused.

The fourth interface may be the display interface 5 shown in FIG. 12.

The sixth instruction may be the instruction 5.

For example, as shown in FIG. 12, the mobile phone receives no instruction 4 within waiting duration, or the mobile phone receives the instruction 5 sent by the vehicle. In this case, the mobile phone may switch to displaying the display interface 5 of remote parking assist. The display interface 5 includes the prompt box 501. The prompt box 501 includes the prompt information "Parking is paused. Resume within 30s. If the operation times out, parking will be automatically exited".

Optionally, the fourth interface further includes a second control, the second control is a control for resuming an auto parking function, and the method 900 further includes: When obtaining a second input of the user for the second control, the mobile terminal sends a seventh instruction to the vehicle, where the seventh instruction instructs to resume the RPA function.

For example, the second control may be the continue control 503 shown in FIG. 12.

The seventh instruction may be the instruction 6.

Optionally, the method 900 further includes: When the seventh instruction sent by the mobile terminal is received and it is detected that the temporary obstacle is removed, the vehicle may continue parking into the target parking space, where the seventh instruction instructs to resume the RPA function.

FIG. 18 is a block diagram of a parking apparatus 1000 according to an embodiment of this application. The apparatus 1000 includes: a receiving unit 1010, configured to receive a first instruction from a user, where the first instruction instructs to park into a target parking space by using a remote parking assist RPA function, and a temporary obstacle is placed in the target parking space; a sending unit 1020, configured to: in response to receiving the first instruction, send a second instruction to a mobile terminal, and control a prompt apparatus to prompt the user to get off a vehicle and remove the temporary obstacle, where the second instruction instructs to park into the target parking space by using the RPA function; and a control unit 1030, configured to: when it is detected that the user gets off the vehicle and a third instruction sent by the mobile terminal is received, control the vehicle to be parked into the target parking space, where the third instruction instructs the vehicle to be parked into the target parking space.

Optionally, the apparatus 1000 further includes: an obtaining unit, configured to obtain information about one or more parking spaces before the receiving unit receives the first instruction of the user, where the one or more parking spaces include the target parking space. The control unit 1030 is further configured to: when the receiving unit receives a fourth instruction of the user, control the prompt apparatus to give a prompt that the temporary obstacle is placed in the target parking space and only the RPA function is supported for the target parking space, where the fourth instruction is an instruction of the user for selecting the target parking space.

Optionally, the control unit 1030 is further configured to: when a distance between the vehicle and the temporary obstacle is less than or equal to a preset distance, control the vehicle to stop parking into the target parking space, and send a fifth instruction to the mobile terminal, where the fifth instruction instructs the mobile terminal to prompt the user to remove the temporary obstacle.

Optionally, the control unit 1030 is further configured to: when it is detected that the user removes the temporary obstacle within first preset duration, control the vehicle to continue parking into the target parking space.

Optionally, the sending unit 1020 is further configured to send a sixth instruction to the mobile terminal when the control unit does not detect that the user removes the temporary obstacle within first preset duration, where the sixth instruction indicates that the temporary obstacle is not removed within the first preset duration.

Optionally, the control unit 1030 is further configured to: when the receiving unit 1010 receives a seventh instruction sent by the mobile terminal and it is detected that the temporary obstacle is removed, control the vehicle to continue parking into the target parking space, where the seventh instruction instructs to resume the RPA function.

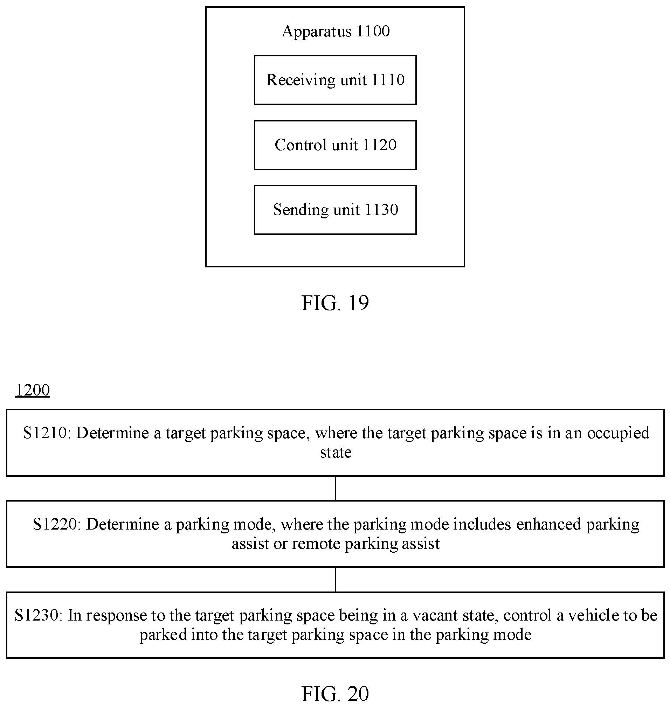

FIG. 19 is a block diagram of a parking apparatus 1100 according to an embodiment of this application. The apparatus 1100 includes: a receiving unit 1110, configured to receive a second instruction sent by a vehicle, where the second instruction instructs to park into a target parking space by using an RPA function, and the target parking space is a parking space that is recognized by the vehicle and in which a temporary obstacle is placed; a control unit 1120, configured to control, according to the second instruction, a display apparatus to display a first interface, where the first interface includes a first control, and the first control is a control for enabling the RPA function; and a sending unit 1130, configured to send a third instruction to the vehicle when an obtaining unit obtains a first input of a user for the first control, where the third instruction instructs the vehicle to start parking into the target parking space.

Optionally, the control unit 1120 is further configured to: when the obtaining unit obtains the first input of the user for the first control, control the display apparatus to switch from displaying the first interface to displaying a second interface, where the second interface is a display interface of parking the vehicle into the target parking space. The receiving unit 1110 is further configured to receive a fifth instruction sent by the vehicle, where the fifth instruction instructs a mobile terminal to prompt the user to remove the temporary obstacle. The control unit 1120 is further configured to control, according to the fifth instruction, the display apparatus to switch from displaying the second interface to displaying a third interface, where the third interface includes first prompt information, and the first prompt information is used to prompt the user to remove the temporary obstacle.

Optionally, the receiving unit 1110 is further configured to receive a sixth instruction sent by the vehicle, where the sixth instruction indicates that the temporary obstacle is not removed within first preset duration. The control unit 1120 is further configured to control, according to the sixth instruction, the display apparatus to switch from displaying the third interface to displaying a fourth interface, where the fourth interface includes second prompt information, and the second prompt information is used to give a prompt that the RPA function is paused.

Optionally, the fourth interface further includes a second control, and the second control is a control for resuming an auto parking function. The sending unit 1130 is further configured to: when the obtaining unit obtains a second input of the user for the second control, send a seventh instruction to the vehicle, where the seventh instruction instructs to resume the RPA function.

FIG. 20 is a schematic flowchart of a parking method 1200 according to an embodiment of this application. The method 1200 may be performed by a vehicle. Alternatively, the method 1200 may be performed by the computing platform 1200. Alternatively, the method 1200 may be performed by a processor, a chip, or a circuit in the computing platform 120. The method 1200 includes the following steps.

S1210: Determine a target parking space, where the target parking space is in an occupied state.

Optionally, determining the target parking space includes: obtaining a first instruction from a user, where the first instruction instructs the target parking space selected by the user.

For example, as shown in FIG. 3, when an operation that the user taps the parking space 305 is detected, it may be determined that the target parking space selected by the user is the parking space 305, and the parking space 305 is in the occupied state. For example, the parking space 305 is occupied by an obstacle (for example, a traffic cone, a parking barrier, or another vehicle).

Optionally, determining the target parking space includes: determining the target parking space based on an environment in which the vehicle is currently located.

Optionally, determining the target parking space based on the environment in which the vehicle is currently located includes: obtaining a plurality of parking spaces around the vehicle; and determining the target parking space based on at least one of parking time, a parking distance, or a quantity of parking adjustments that is required for parking the vehicle into each of the plurality of parking spaces. For example, the target parking space is a parking space in which a quantity of parking adjustments required for the vehicle is the smallest. For another example, the target parking space is a parking space in which parking time required is the shortest. For another example, the target parking space is a parking space in which a parking distance required is the shortest.

For example, when the environment in which the vehicle is currently located includes a plurality of parking spaces, and the plurality of parking spaces include only one parking space in which a temporary obstacle (for example, a traffic cone or a parking barrier) is placed and in which no other vehicle is parked, and all parking space other than the parking space are parked with other vehicles, the parking space in which the temporary obstacle is placed and in which no other vehicle is parked may be determined as the target parking space.

For example, the user may set a dedicated parking space in advance in a map. When the environment in which the vehicle is currently located includes the dedicated parking space of the user, the dedicated parking space may be determined as the target parking space. That the target parking space is in the occupied state includes: another vehicle is parked in the dedicated parking space, or the dedicated parking space occupied by a temporary obstacle (for example, a traffic cone or a parking barrier).

S1220: Determine a parking mode, where the parking mode includes enhanced parking assist or remote parking assist.

Optionally, determining the parking mode includes: obtaining a second instruction of the user, where the second instruction instructs the parking mode.

For example, as shown in FIG. 4, when an operation that the user taps the control 302 is detected, it may be determined that the user selects remote parking assist.

Optionally, determining the parking mode includes: determining the parking mode based on a status of the target parking space. For example, when the target parking space is in the occupied state, it may be determined that the parking mode is enhanced parking assist or remote parking assist.

For example, as shown in FIG. 3, when an operation that the user taps the parking space 305 is detected, it may be determined that the target parking space selected by the user is the parking space 305. When it is determined that the parking space 305 is in the occupied state, remote parking assist into the parking space 305 may be directly determined.

S1230: In response to the target parking space being in a vacant state, control the vehicle to be parked into the target parking space in the parking mode.

Optionally, the parking mode is enhanced parking assist. In response to the target parking space being in the vacant state, controlling the vehicle to be parked into the target parking space in the parking mode includes: in response to determining the parking mode and the target parking space being in the occupied state, controlling the vehicle to output first prompt information, where the first prompt information indicates that enhanced parking assist is incapable of being activated and/or indicates that the user needs to update the status of the target parking space to the vacant state; and in response to the status of the target parking space being updated to the vacant state, controlling the vehicle to be parked into the target parking space.

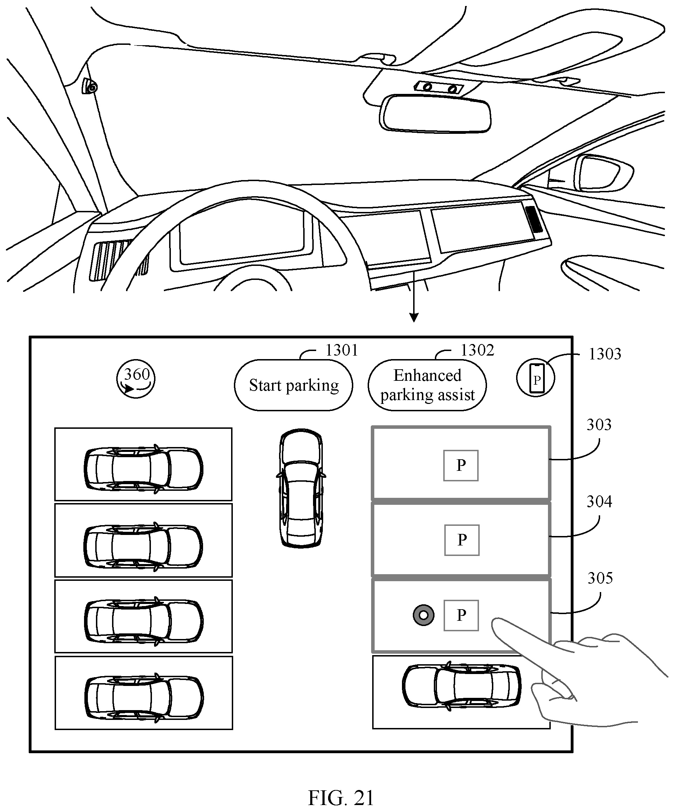

For example, FIG. 21 to FIG. 24 are another group of HMIs according to an embodiment of this application.

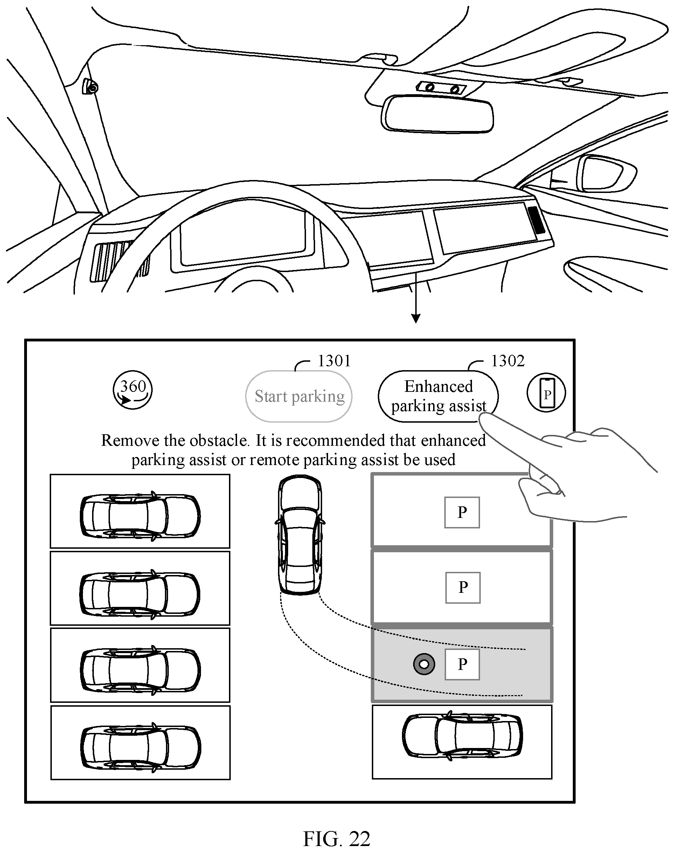

As shown in FIG. 21, the vehicle may recognize a plurality of parking spaces (including the parking space 303 to the parking space 305) based on data collected by a sensor, and may display information about the plurality of parking spaces around the vehicle through a central display. The parking space 303 and the parking space 304 are in a vacant state, and the parking space 305 is in an occupied state. For example, the parking space 305 is a parking space occupied by a temporary obstacle (for example, a traffic cone). An HMI further includes a control 1301, a control 1302, and a control 1303. The control 1301 is a control corresponding to an APA function, the control 1302 is a control corresponding to an enhanced parking assist function, and the control 1303 is a control corresponding to a remote parking assist function. When a tap operation performed by a user on the parking space 305 is detected, the vehicle may display, through the central display, an HMI shown in FIG. 22.

When the tap operation performed by the user on the parking space 305 is detected, it may be determined that the target parking space is the parking space 305.

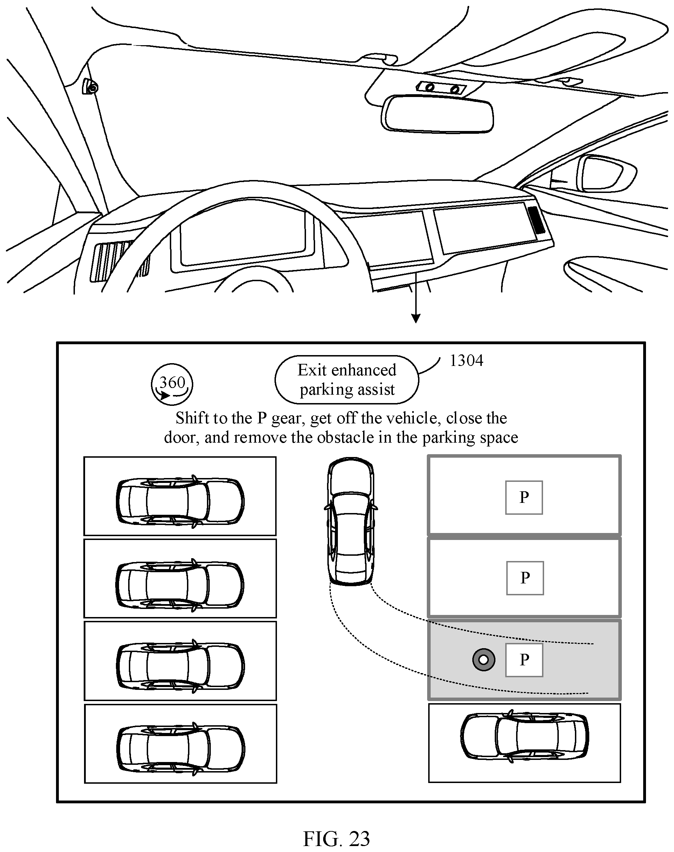

As shown in FIG. 22, in response to detecting the operation that the user taps the parking space 305, the vehicle may display, through the central display, a parking path of parking the vehicle into the parking space 305 from a current location and prompt information "Remove the obstacle. It is recommended that enhanced parking assist or remote parking assist be used". In this case, the control 1301 cannot be tapped, and the control 1302 and the control 1303 can be tapped. When detecting an operation that the user taps the control 1302, the vehicle may display, through the central display, an HMI shown in FIG. 23.

When the tap operation of the user on the control 1302 is detected, it may be determined that the parking mode is enhanced parking assist.

Expression of the prompt information in the HMI in embodiments of this application is not limited to the example in the figure. For example, the prompt information may include some or all of content in the example, or may include other prompt information that facilitates a user operation.

Optionally, in response to determining the parking mode and the target parking space being in the occupied state, controlling the vehicle to output the first prompt information includes: when the target parking space is in the occupied state, performing at least one of the following: controlling a display of the vehicle to display prompt information; controlling a vehicle light of the vehicle to blink; or controlling a speaker of the vehicle to make an alert tone.

For example, the prompt information may be prompt information shown in FIG. 23, and the prompt information is used to prompt the user to update the status of the target parking space to the vacant state. As shown in FIG. 23, in response to detecting the operation that the user taps the control 1302, the vehicle may display prompt information "Shift to the P gear, get off the vehicle, close the door, and remove the obstacle" through the central display. In this case, a control 1304 may be displayed on the HMI, and the control 1304 is a control for exiting enhanced parking assist.

The prompt information shown in the HMI is merely an example. This is not specifically limited in embodiments of this application. For example, as shown in FIG. 23, the vehicle may further display other prompt information through the central display, for example, "The parking space is occupied, and enhanced parking assist cannot be activated", "Waiting for the parking space to be released. Enhanced parking assist is temporarily not activated", or "Remove the obstacle, or enhanced parking assist cannot be activated".

For example, before it is detected that the user gets off the vehicle and the target parking space is in the vacant state, a speaker outside a cockpit may make an alert tone "Please remove the obstacle in the parking space".

For example, before it is detected that the user gets off the vehicle and the target parking space is in the vacant state, the vehicle may control the vehicle light to blink, to prompt the user to remove the obstacle in the target parking space.

Before it is detected that a status of the parking space 305 is updated to a vacant state, the vehicle may not activate enhanced parking assist. For example, before it is detected that the status of the parking space 305 is updated to the vacant state, the vehicle may send a first message to a mobile phone. The first message indicates that the target parking space (for example, the parking space 305) is in the occupied state.

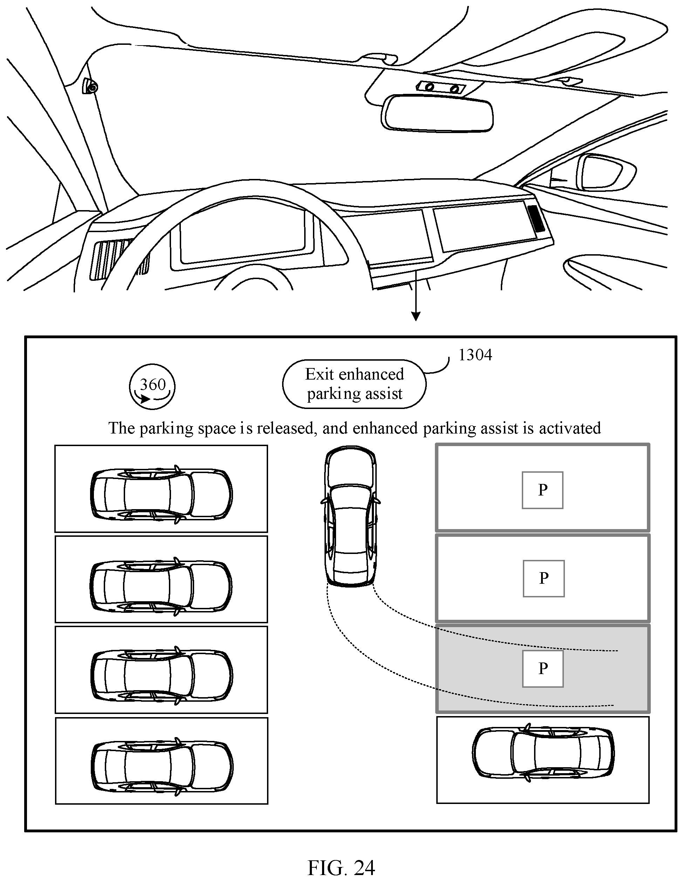

As shown in FIG. 24, when it is detected that the target parking space is in the vacant state, the vehicle may activate enhanced parking assist and display prompt information "The parking space is released, and enhanced parking assist is activated" through the central display.

That the target parking space is released may also be understood as that the target parking space is in the vacant state.

Optionally, in response to determining the parking mode and the target parking space being in the occupied state, controlling the vehicle to output the first prompt information includes: sending a first message to a mobile terminal, where the first message indicates that the target parking space is in the occupied state, and the mobile terminal is configured to give a prompt, based on the first message, that the enhanced parking assist function cannot be activated and/or give the user a prompt that the status of the target parking space needs to be updated to the vacant state.

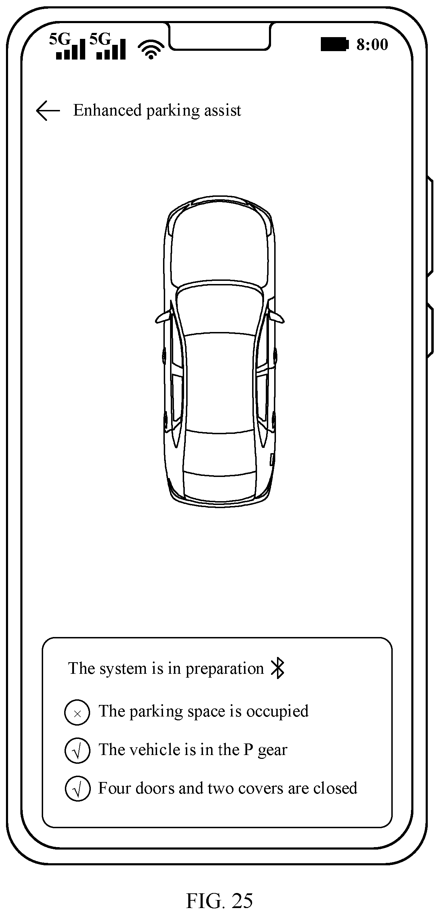

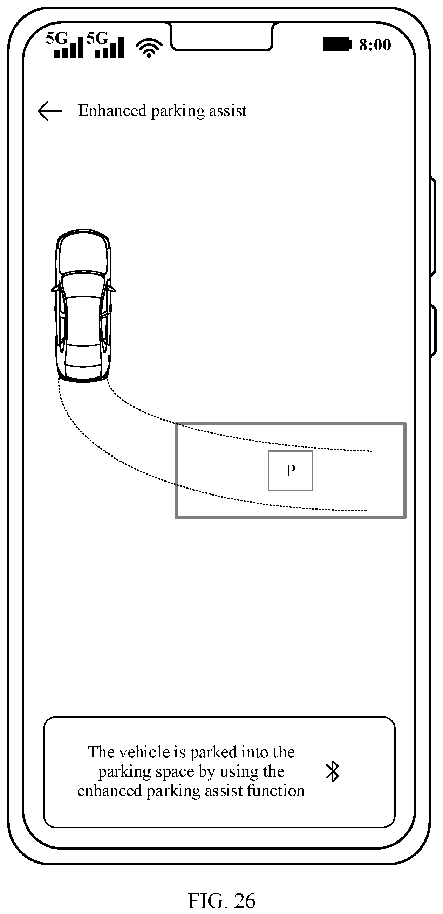

For example, FIG. 25 and FIG. 26 are HMIs according to an embodiment of this application.

As shown in FIG. 25, in response to receiving the first message, the mobile phone may display a display interface of enhanced parking assist. The display interface includes prompt information "The system is in preparation, the parking space is occupied, the vehicle is in the P gear, and four doors and two covers are closed". The user may determine, based on the display interface, that the enhanced parking assist function is not activated because the target parking space is in the occupied state.

The foregoing four doors and two covers are described by using a car as an example. The four doors indicate two front doors and two rear doors, and the two covers indicate a front hood and a trunk lid.

For example, when displaying the prompt information "The system is in preparation, the parking space is occupied, the vehicle is in the P gear, and four doors and two covers are closed", the mobile phone may further prompt the user in a vibration manner.

As shown in FIG. 26, in response to receiving a second message, the mobile phone may display another display interface of enhanced parking assist. The display interface includes prompt information "The vehicle is parked into the parking space by using the enhanced parking assist function". The second message indicates that the target parking space is in the vacant state.

Controlling the vehicle to output the first prompt information includes: before it is detected that the user gets off the vehicle, controlling the display in the cockpit to display prompt information (for example, the prompt information is "Shift to the P gear, get off the vehicle, close the door, and remove the obstacle") or controlling the speaker in the cockpit to output an alert tone (for example, the alert tone is "Shift to the P gear, get off the vehicle, close the door, and remove the obstacle"); controlling the vehicle light to blink when it is detected that the user gets off the vehicle and closes the door; and sending, by the vehicle, the first message to the mobile phone when it is detected, within preset duration (for example, 10s) starting from time when the vehicle light starts to blink, that the target parking space is in the occupied state. After receiving the first message, the mobile phone may display the prompt information shown in FIG. 25 and prompt the user in a vibration manner.

Optionally, the parking mode is enhanced parking assist. In response to the target parking space being in the vacant state, controlling the vehicle to be parked into the target parking space in an enhanced parking assist manner includes: in response to determining the parking mode and the target parking space being in the occupied state, controlling the vehicle to travel from a start location to a vicinity of the target parking space and then stop; and in response to the status of the target parking space being updated to the vacant state, controlling the vehicle to be parked into the target parking space.

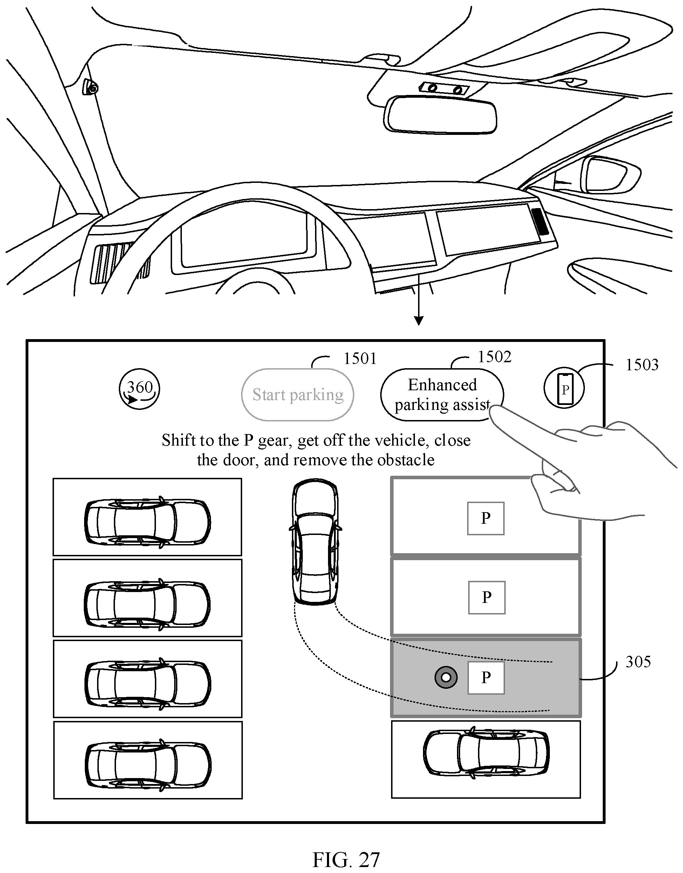

For example, FIG. 27 to FIG. 31 are another group of HMIs according to an embodiment of this application.

When detecting an operation that the user selects the parking space 305, the vehicle may display, through the central display, an HMI shown in FIG. 27. On the HMI, a control 1501 is in an untappable state, and a control 1502 and a control 1503 are in a tappable state. The control 1501 is a control corresponding to the APA function, the control 1502 is a control corresponding to the enhanced parking assist function, and the control 1503 is a control corresponding to the remote parking assist function. When an operation that the user taps the control 1502 is detected, prompt information "Shift to the P gear, get off the vehicle, close the door, and remove the obstacle" may be displayed through the central display. When detecting that the user gets off the vehicle and closes the door, the vehicle may activate enhanced parking assist.

Optionally, when it is detected that the parking space 305 is occupied by an obstacle, the control 1501 displayed through the central display may be controlled to be in the untappable state.

Optionally, when it is detected that the parking space 305 is occupied by the obstacle and a distance between the vehicle and the parking space 305 is greater than or equal to a preset distance, or the parking space 305 is occupied by the obstacle and a distance between the vehicle and the obstacle in the parking space 305 is greater than or equal to a preset distance, the control 1501 displayed through the central display may be controlled to be in a tappable state.

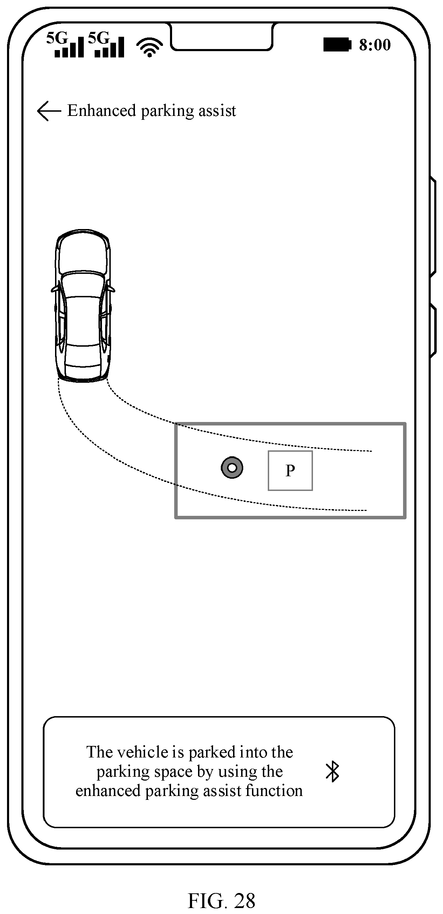

When the vehicle activates enhanced parking assist, the vehicle may send a message to the mobile phone. The message indicates that the vehicle is parked into the target parking space in the enhanced parking assist mode. In response to receiving the message sent by the vehicle, the mobile phone displays an HMI shown in FIG. 28. The HMI includes prompt information "The vehicle is parked into the parking space by using the enhanced parking assist function", and the HMI further includes information about the vehicle and the target parking space. The obstacle is placed in the target parking space.

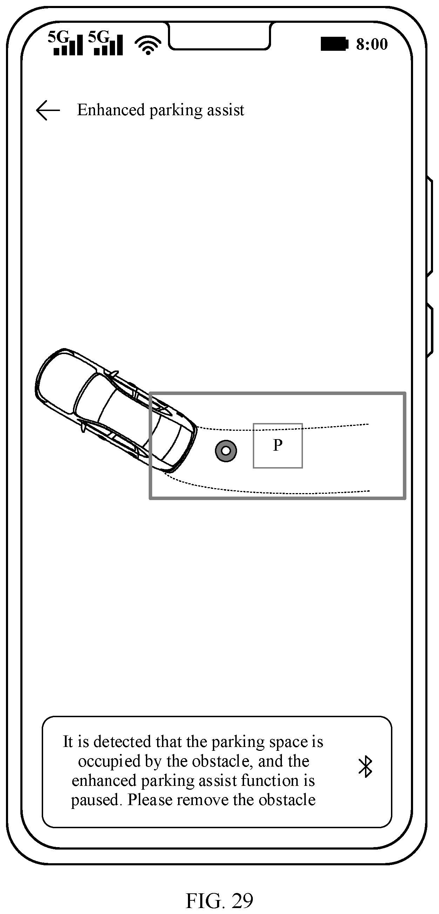

When the vehicle travels from the start location to the vicinity of the target parking space and then stops, the vehicle may send the first message to the mobile phone. The first message indicates that the target parking space is in the occupied state. As shown in FIG. 29, in response to receiving the first message, the mobile phone may display prompt information "It is detected that the parking space is occupied by the obstacle, and the enhanced parking assist function is paused. Please remove the obstacle".

Optionally, the first message further indicates the vehicle to travel to the vicinity of the target parking space.

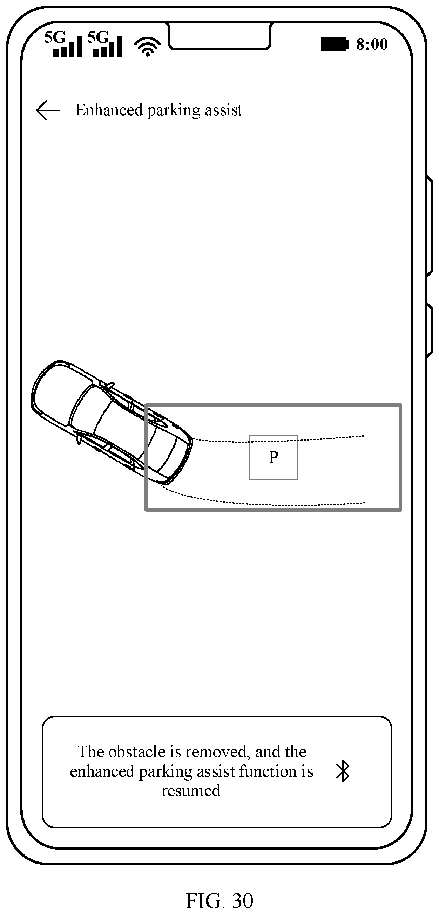

When it is detected that the parking space 305 is in the vacant state or it is detected that the user removes the obstacle, the vehicle may activate enhanced parking assist and send a message to the mobile phone. The message indicates that the target parking space is in the vacant state. As shown in FIG. 30, in response to receiving the message, the mobile phone may display prompt information "The obstacle is removed, and the enhanced parking assist function is resumed".

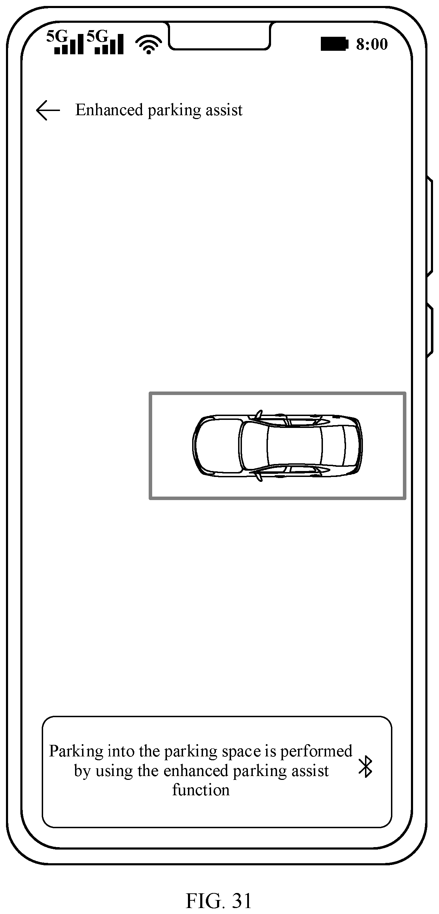

When it is detected that the vehicle is parked into the parking space 305, the vehicle may send a message to the mobile phone. The message indicates that the vehicle is parked into the target parking space. As shown in FIG. 31, in response to receiving the message, the mobile phone may display prompt information "Parking into the parking space is performed by using the enhanced parking assist function".

Optionally, when the parking mode is determined and the target parking space is in the occupied state, that the vehicle travels from the start location to the vicinity of the target parking space and then stops further includes: controlling the vehicle to output second prompt information, where the second prompt information indicates that the user needs to update the status of the target parking space to the vacant state, and an output manner of the second prompt information includes at least one of the following: blinking of the vehicle light, a sound, or prompt information pushed to the mobile terminal.

For example, controlling the vehicle to output the second prompt information includes: sending the first message to the mobile phone, so that the mobile phone displays the prompt information shown in FIG. 29.

For a process in which the vehicle outputs the second prompt information, refer to the foregoing process in which the vehicle outputs the first prompt information. Details are not described herein again.

Optionally, the parking mode is enhanced parking assist. Before determining the parking mode, the method 1200 further includes: receiving an instruction of the user, where the instruction indicates that the user activates parking; and in response to the received instruction, controlling the vehicle to travel from the start location to the vicinity of the target parking space and then stop.

Optionally, receiving the instruction of the user includes: receiving an instruction of the user for enabling the APA function.

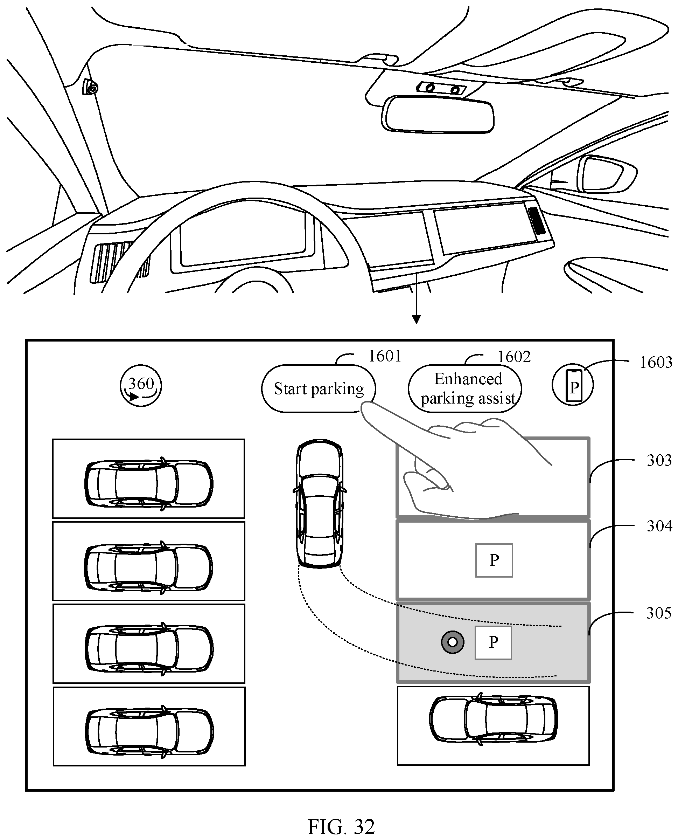

For example, FIG. 32 to FIG. 34 are another group of HMIs according to an embodiment of this application.

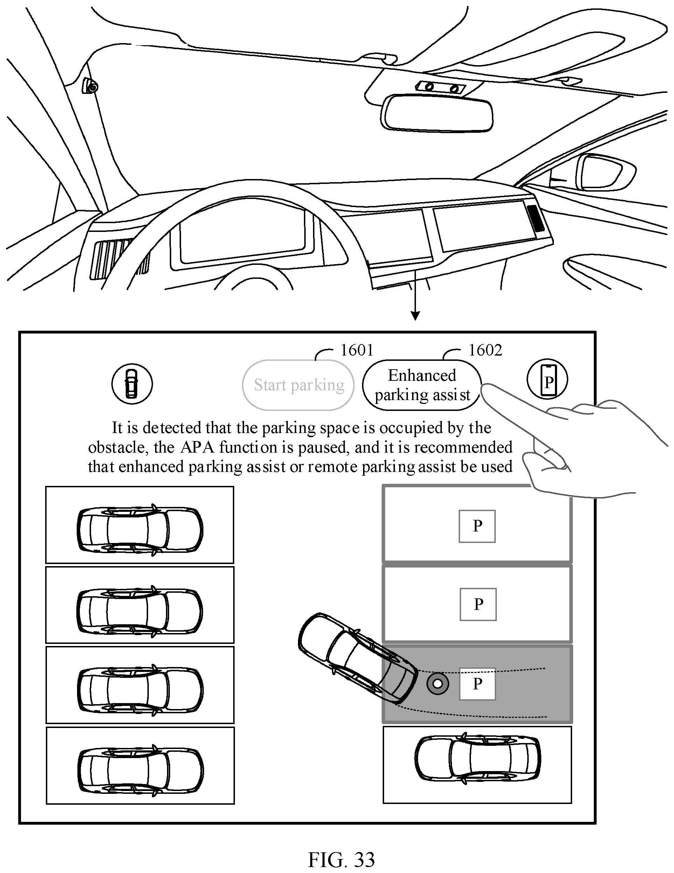

When detecting an operation that the user taps the parking space 305, the vehicle may display, through the central display, an HMI shown in FIG. 32. On the HMI, a control 1601, a control 1602, and a control 1603 each are in a tappable state. The control 1601 is a control corresponding to the APA function, the control 1602 is a control corresponding to the enhanced parking assist function, and the control 1603 is a control corresponding to the remote parking assist function. When detecting an operation that the user taps the control 1601, the vehicle may be controlled to perform APA parking into the parking space 305, and display, through the central display, an HMI shown in FIG. 33.

Optionally, when it is detected that the distance between the vehicle and the parking space 305 is greater than or equal to the preset distance, or the distance between the vehicle and the obstacle in the parking space 305 is greater than or equal to the preset distance, the control 1601 displayed through the display may be controlled to be in the tappable state.

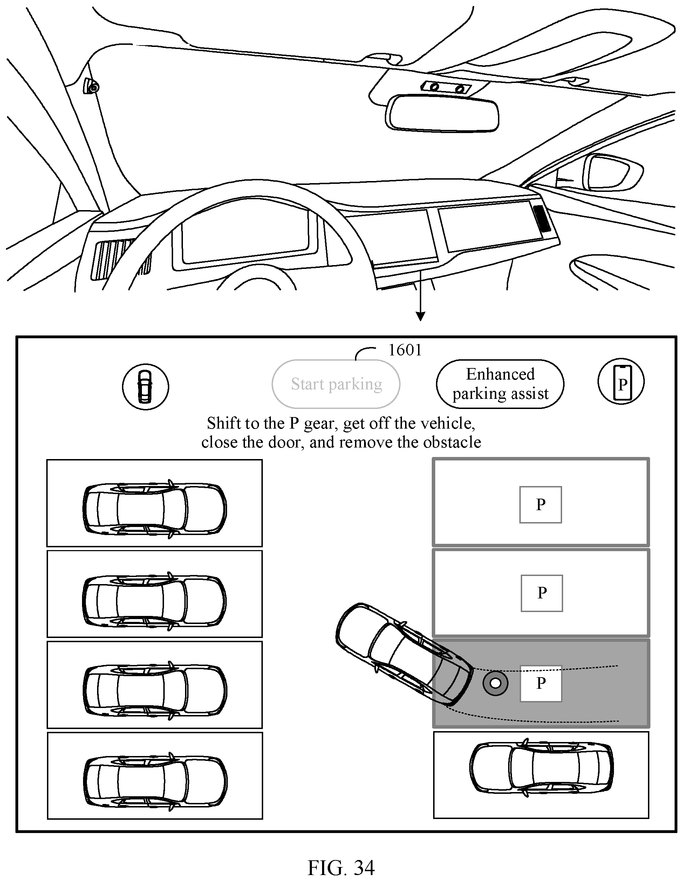

As shown in FIG. 33, after detecting that the vehicle travels from the start location to the vicinity of the target parking space, the vehicle may stop, and display prompt information "It is detected that the parking space is occupied by the obstacle, the APA function is paused, and it is recommended that enhanced parking assist or remote parking assist be used" through the central display. In this case, the control 1601 is in an untappable state, and the control 1602 and the control 1603 are in the tappable state. When an operation that the user taps the control 1602 is detected, an HMI shown in FIG. 34 may be displayed through the central display.

As shown in FIG. 34, the vehicle may display prompt information "Shift to the P gear, get off the vehicle, close the door, and remove the obstacle" through the central display. Before detecting that the parking space 305 is in the vacant state, the vehicle may control enhanced parking assist to be in an inactive state. When detecting that the parking space 305 is in the vacant state, the vehicle may activate enhanced parking assist.

Optionally, the parking mode is remote parking assist. In response to the target parking space being in the vacant state, controlling the vehicle to be parked into the target parking space in the parking mode includes: in response to determining the parking mode and the target parking space being in the occupied state, controlling the vehicle to output first prompt information, where the first prompt information indicates that remote parking assist is incapable of being activated and/or indicates that the user needs to update the status of the target parking space to the vacant state; and in response to the status of the target parking space being updated to the vacant state, controlling the vehicle to be parked into the target parking space.

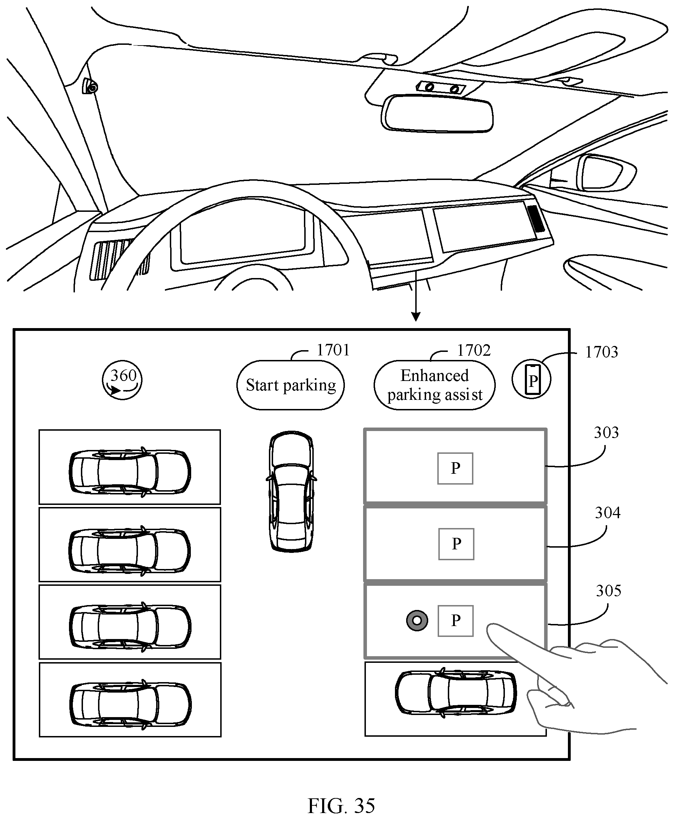

For example, FIG. 35 to FIG. 39 are another group of HMIs according to an embodiment of this application.

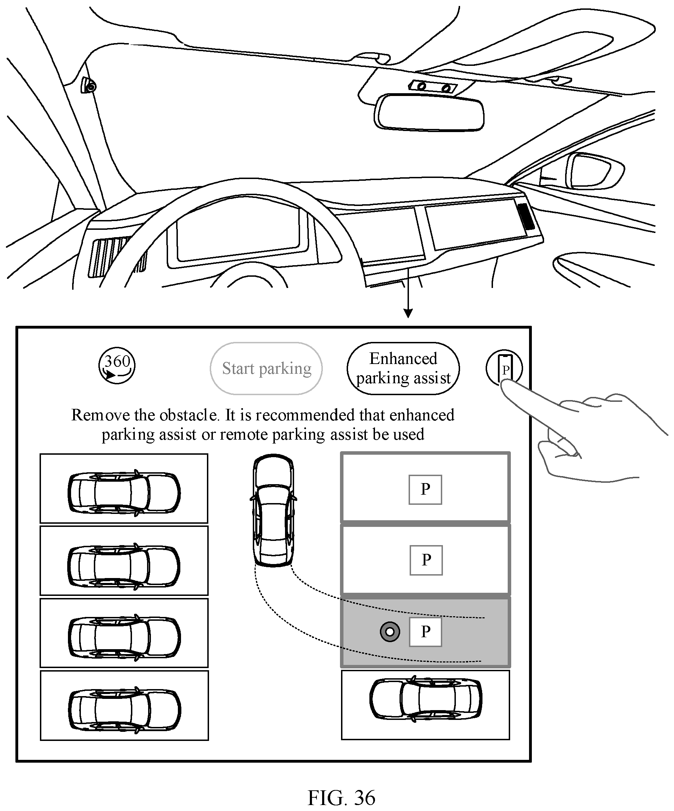

As shown in FIG. 35, the vehicle may recognize a plurality of parking spaces (including the parking space 303 to the parking space 305) based on data collected by the sensor, and may display information about the plurality of parking spaces around the vehicle through the central display. The parking space 303 and the parking space 304 are in an unoccupied state, and the parking space 305 is in an occupied state. For example, the parking space 305 is a parking space occupied by a temporary obstacle (for example, a traffic cone). An HMI further includes a control 1701, a control 1702, and a control 1703. The control 1701 is a control corresponding to the APA function, the control 1702 is a control corresponding to the enhanced parking assist function, and the control 1703 is a control corresponding to the remote parking assist function. When a tap operation performed by the user on the parking space 305 is detected, the vehicle may display, through the central display, an HMI shown in FIG. 36.

When the tap operation performed by the user on the parking space 305 is detected, it may be determined that the target parking space is the parking space 305.

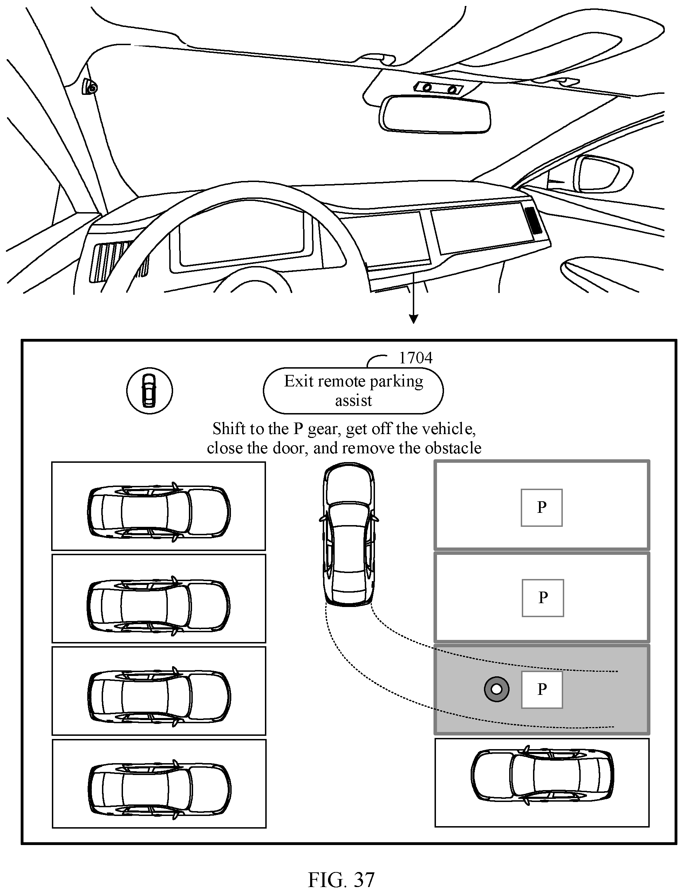

As shown in FIG. 36, in response to detecting the operation that the user taps the parking space 305, the vehicle may display, through the central display, a parking path of parking the vehicle into the parking space 305 from a current location and prompt information "Remove the obstacle. It is recommended that enhanced parking assist or remote parking assist be used". In this case, the control 1701 cannot be tapped, and the control 1702 and the control 1703 can be tapped. When a tap operation performed by the user on the control 1703 is detected, the vehicle may display, through the central display, an HMI shown in FIG. 37.

When the tap operation of the user on the control 1703 is detected, it may be determined that the parking mode is enhanced parking assist.

Optionally, in response to determining the parking mode and the target parking space being in the occupied state, controlling the vehicle to output the first prompt information includes: when the target parking space is in the occupied state, performing at least one of the following: controlling the display of the vehicle to display prompt information; controlling the vehicle light of the vehicle to blink; or controlling the speaker of the vehicle to make an alert tone.

As shown in FIG. 37, in response to detecting the operation that the user taps the control 1703, the vehicle may display prompt information "Shift to the P gear, get off the vehicle, close the door, and remove the obstacle" through the central display. For example, the first prompt information may be the prompt information shown in FIG. 37. In this case, a control 1704 may be displayed on the HMI, and the control 1704 is a control for exiting remote parking assist.

Optionally, when detecting an operation that the user taps the control 1703, the vehicle may control the vehicle light to blink; or when detecting that the user gets off the vehicle, the vehicle may control the vehicle light to blink.

Optionally, controlling the vehicle to output the first prompt information includes: sending a first message to the mobile terminal, where the first message indicates that the target parking space is in the occupied state, and the mobile terminal is configured to give a prompt that remote parking assist is incapable of being activated and/or give the user a prompt that the status of the target parking space needs to be updated to the vacant state.

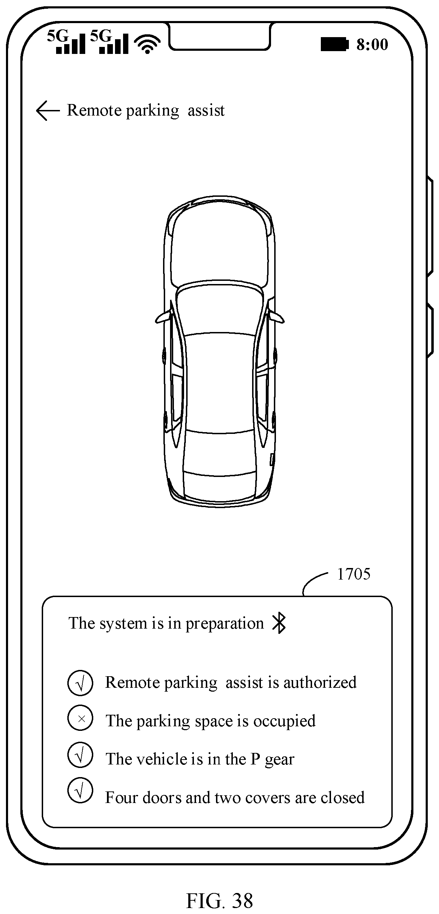

For example, in response to determining that the parking mode is remote parking assist and the target parking space is in the occupied state, the vehicle may send the first message to the mobile phone. As shown in FIG. 38, in response to receiving the first message, the mobile phone may display prompt information 1705 "The system is in preparation, remote parking assist is authorized, the parking space is occupied, the vehicle is in the P gear, and four doors and two covers are closed". The prompt information may give the user a prompt that remote parking assist cannot be activated, and/or give the user a prompt that the status of the parking space 305 needs to be updated to the vacant state.

Optionally, the method 1200 further includes: When the target parking space is updated to the vacant state, the vehicle may send a second message to the mobile phone, where the second message indicates that the target parking space is in the vacant state and/or the remote parking assist function is available.

In response to the second message, the mobile phone may display prompt information, where the prompt information is used to prompt the user to activate remote parking assist; and send a third message to the vehicle in response to an input of the user for activating remote parking assist, where the third message indicates to activate remote parking assist.

Optionally, in response to the status of the target parking space being updated to the vacant state, controlling the vehicle to be parked into the target parking space includes: in response to the status of the target parking space being updated to the vacant state and receiving a message sent by the mobile terminal, controlling the vehicle to be parked into the target parking space, where the message indicates the vehicle to be parked into the target parking space.

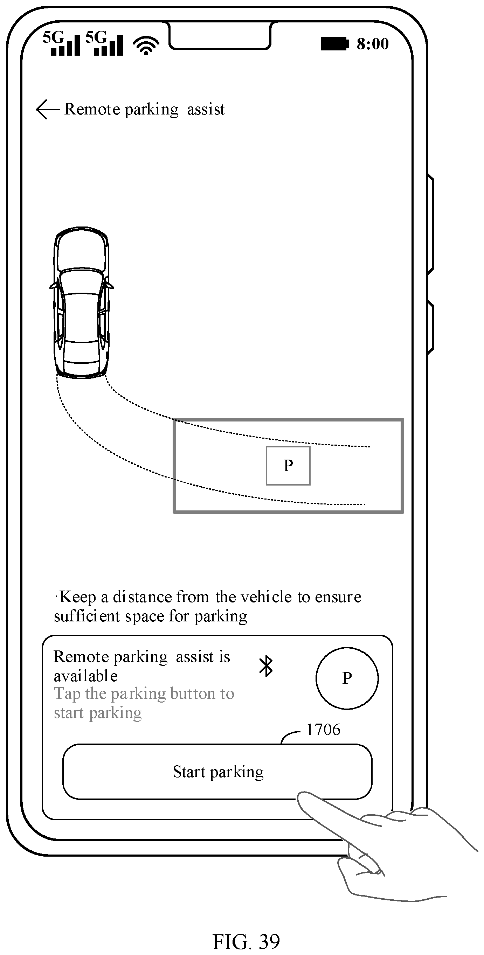

For example, as shown in FIG. 39, in response to receiving the second message, the mobile phone may display a display interface of remote parking assist. The display interface includes prompt information "Remote parking assist is available. Tap the parking button to start parking" and a start parking control 1706. When detecting an operation that the user taps the start parking control 1706, the mobile phone may send the third message to the vehicle. In response to the third message, the vehicle may be parked into the target parking space.

Optionally, the parking mode is remote parking assist. In response to the target parking space being in the vacant state, controlling the vehicle to perform remote parking assist into the target parking space includes: in response to receiving an instruction sent by the mobile terminal and the target parking space being in the occupied state, controlling the vehicle to travel from the start location to the vicinity of the target parking space and then stop, where the instruction is used by the user to activate remote parking assist on the mobile terminal; and in response to the status of the target parking space being updated to the vacant state, controlling the vehicle to be parked into the target parking space.

For example, as shown in FIG. 7, in response to detecting an operation that the user taps the control 403, the mobile phone may send an instruction to the vehicle. The instruction instructs the user to activate remote parking assist on the mobile phone. In this case, the target parking space (the parking space 305) is in the occupied state. In response to receiving the instruction, the vehicle may travel from the start location to the vicinity of the target parking space and then stop. When the status of the target parking space is updated to the vacant state, the vehicle may perform remote parking assist into the target parking space.

Optionally, before in response to the status of the target parking space being updated to the vacant state, the vehicle is controlled for parking into the target parking space, the method 1200 further includes: in response to the target parking space being in the occupied state, controlling the vehicle to output third prompt information.

For a process of controlling the vehicle to output the third prompt information, refer to the foregoing process of controlling the vehicle to output the first prompt information.

For example, controlling the vehicle to output the third prompt information includes: sending a first message to the mobile terminal, where the first message indicates that the target parking space is in the occupied state.

For example, as shown in FIG. 10, in response to receiving the first message, the mobile phone may display the prompt information "The parking space is temporarily occupied. Please wait. Remove the temporary obstacle in the parking space and continue parking".

Optionally, the parking mode is remote parking assist. Before a second instruction of the user is received, the method further includes: receiving another instruction of the user, where the another instruction indicates that the user activates parking; and in response to the received another instruction, controlling the vehicle to travel from the start location to the vicinity of the target parking space and then stop.

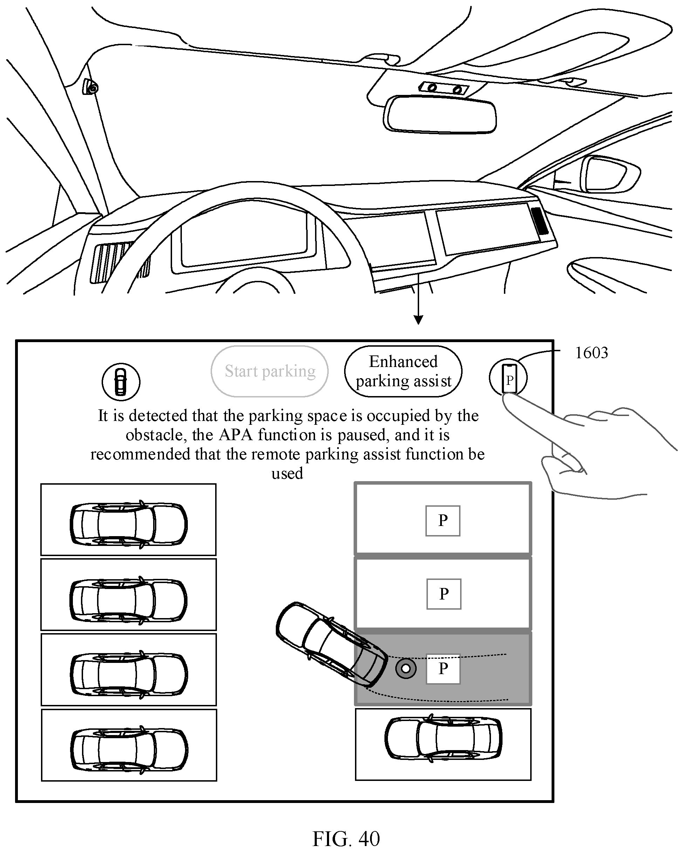

FIG. 40 to FIG. 43 are another group of HMIs according to an embodiment of this application.

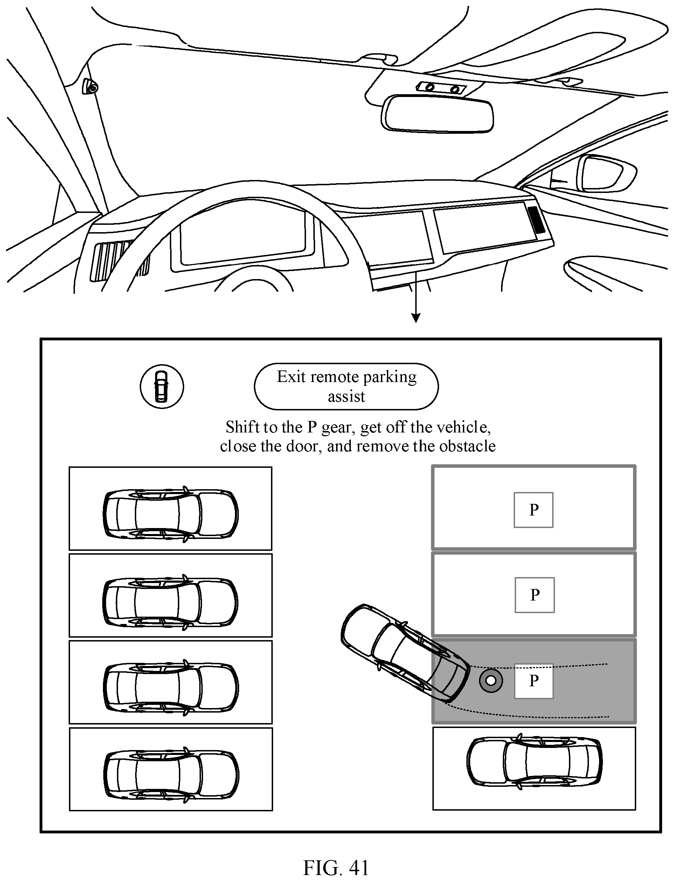

As shown in FIG. 40, after detecting that the vehicle travels from the start location to the vicinity of the target parking space through APA, the vehicle may stop, and display prompt information "It is detected that the parking space is occupied by the obstacle, the APA function is paused, and it is recommended that enhanced parking assist or remote parking assist be used" through the central display. In this case, the control 1601 is in an untappable state, and the control 1602 and the control 1603 are in the tappable state. When an operation that the user taps the control 1603 is detected, an HMI shown in FIG. 41 may be displayed through the central display.

As shown in FIG. 41, the vehicle may display prompt information "Shift to the P gear, get off the vehicle, close the door, and remove the obstacle" through the central display.

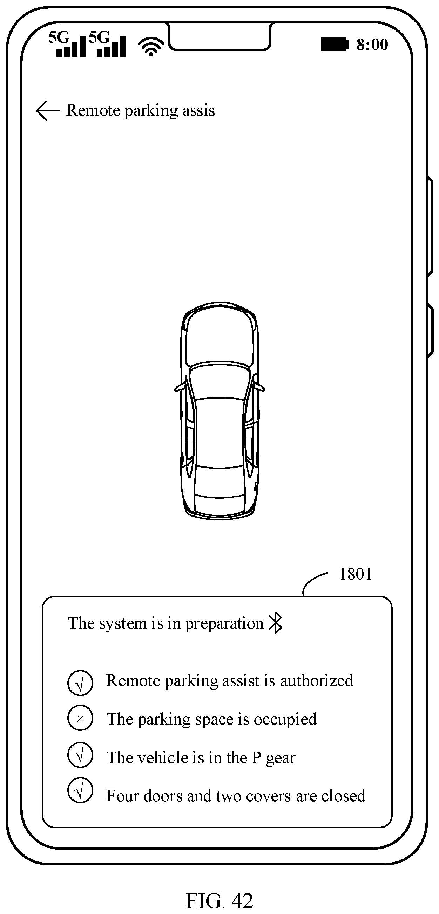

When detecting that the target parking space is in the occupied state, the vehicle may send a first message to the mobile phone. As shown in FIG. 42, in response to receiving the first message, the mobile phone may display prompt information 1801 "The system is in preparation, remote parking assist is authorized, the parking space is occupied, the vehicle is in the P gear, and four doors and two covers are closed". The prompt information may give the user a prompt that remote parking assist cannot be activated, and/or give the user a prompt that the status of the parking space 305 needs to be updated to the vacant state.

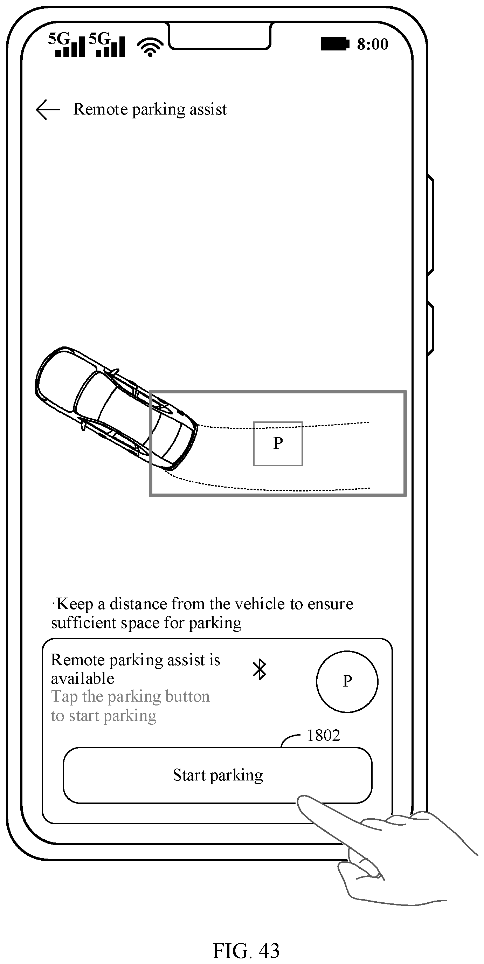

When detecting that the status of the target parking space changes to the vacant state, the vehicle may send a second message to the mobile phone. As shown in FIG. 43, in response to receiving the second message, the mobile phone may display a display interface of remote parking assist. The display interface includes prompt information "Remote parking assist is available. Tap the parking button to start parking" and a start parking control 1802. When detecting an operation that the user taps the start parking control 1802, the mobile phone may send the third message to the vehicle. In response to the third message, the vehicle may be parked into the target parking space.

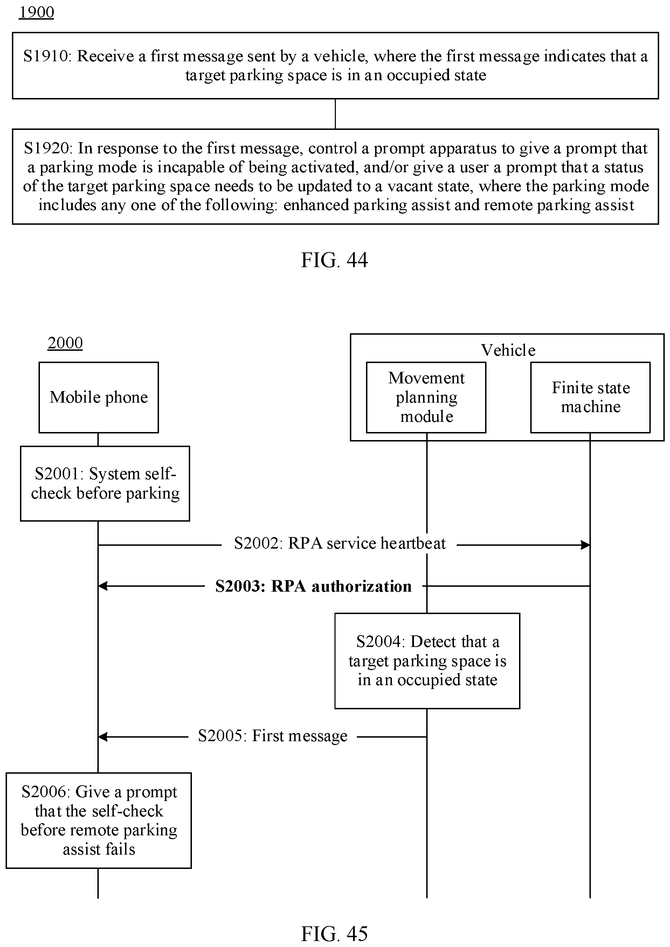

FIG. 44 is a schematic flowchart of a parking method 1900 according to an embodiment of this application. The method 1900 may be performed by a mobile terminal. The method 1900 includes the following steps.

S1910: Receive a first message sent by a vehicle, where the first message indicates that a target parking space is in an occupied state.

S1920: In response to the first message, control a prompt apparatus to give a prompt that a parking mode is incapable of being activated, and/or give a user a prompt that a status of the target parking space needs to be updated to a vacant state, where the parking mode includes any one of the following: enhanced parking assist and remote parking assist.

For example, as shown in FIG. 25, when receiving the first message sent by the vehicle, the mobile phone may display the prompt information "The parking space is occupied" on the display. The prompt information may give the user a prompt that enhanced parking assist cannot be activated, or prompt the user to update the status of the target parking space to the vacant state.

For example, as shown in FIG. 38, when receiving the first message sent by the vehicle, the mobile phone may display the prompt information "The parking space is occupied" on the display. The prompt information may give the user a prompt that remote parking assist cannot be activated, or prompt the user to update the status of the target parking space to the vacant state.

Optionally, the parking mode is remote parking assist, and the method 1900 further includes: receiving a second message sent by the vehicle, where the second message indicates that the target parking space is in the vacant state; in response to the second message, controlling a display apparatus to prompt the user to activate remote parking assist; and sending a third message to the vehicle in response to an input of the user for activating remote parking assist, where the third message indicates to activate remote parking assist.

For example, as shown in FIG. 39, when receiving the second message sent by the vehicle, the mobile phone may display the prompt information "Remote parking assist is available. Tap the parking button to start parking" and the start parking control 1706. When an operation that the user taps the start parking control 1706 is detected, the third message may be sent to the vehicle.

Optionally, the first message further indicates the vehicle to travel to a vicinity of the target parking space.

For example, when the first message indicates that the target parking space is in the occupied state and indicates the vehicle to travel to the vicinity of the target parking space, the mobile phone may give the user a prompt that enhanced parking assist or remote parking assist cannot be activated.

Optionally, before receiving the first message sent by the vehicle, the method 1900 further includes: receiving a fourth message sent by the vehicle, where the fourth message indicates that the vehicle is far away from the target parking space; and in response to the fourth message, controlling the prompt apparatus to prompt the user to activate remote parking assist.

For example, as shown in FIG. 7, the vehicle may send the fourth message to the mobile phone, where the fourth message indicates that the vehicle is away from the target parking space. In response to the fourth message, the mobile phone may display the prompt information "Remote parking assist is available. Tap the parking button to start parking" and the start parking control 403.

Optionally, the parking mode is enhanced parking assist, and the method further includes: receiving a fifth message sent by the vehicle, where the fifth message indicates that the target parking space is in the vacant state; and in response to the fifth message, controlling the prompt apparatus to give a prompt that enhanced parking assist is activated.

For example, as shown in FIG. 26, when the status of the target parking space is updated to the vacant state, the vehicle may activate enhanced parking assist and send the fifth message to the mobile phone, where the fifth message indicates that the target parking space is in the vacant state. In response to the fifth message, the mobile phone may display the prompt information "The vehicle is parked into the parking space by using the enhanced parking assist function".

FIG. 45 is a schematic flowchart of a parking method 2000 according to an embodiment of this application. As shown in FIG. 45, the method 2100 may be performed by a mobile phone and a vehicle. The method 2000 includes the following steps.

Optionally, in S2001, the mobile phone performs system self-check before remote parking assist.

Optionally, in S2002, the mobile phone sends an RPA service heartbeat to a finite state machine.

Optionally, in S2003, the finite state machine sends RPA authorization to the mobile phone.

In S2004, a movement planning module detects that a target parking space is in an occupied state.

In S2005, the movement planning module sends a first message to the mobile phone, where the first message indicates that the target parking space is in the occupied state.

For example, when it is determined that the target parking space is in the occupied state, the movement planning module may send the first message to the mobile phone.

In S2006, the mobile phone gives a prompt that the self-check before remote parking assist fails.

For example, as shown in FIG. 38, when receiving the first message, the mobile phone may give a prompt that the self-check before remote parking assist fails. For example, "The parking space is occupied" is displayed on a display interface of the mobile phone.

In FIG. 45, an example in which the vehicle includes the movement planning module and the finite state machine is used for description. Embodiments of this application are not limited thereto. For example, functions implemented by the finite state machine and the movement planning module may alternatively be implemented by a unified module or system. For example, the functions may be implemented by a parking system or an ADAS in the vehicle.

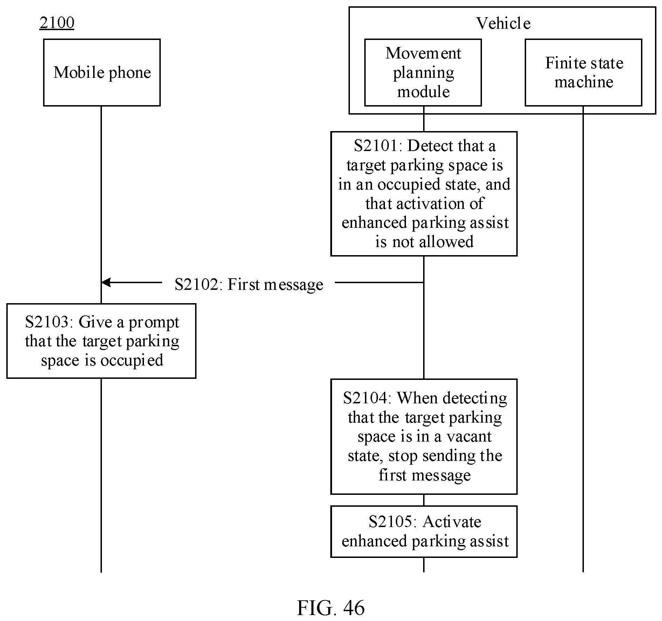

FIG. 46 is a schematic flowchart of a parking method 2100 according to an embodiment of this application. As shown in FIG. 46, the method 2100 may be performed by a mobile phone and a vehicle. The method 2100 includes the following steps.

In S2101, a movement planning module detects that a target parking space is in an occupied state, and that activation of enhanced parking assist is not allowed.

In S2102, the movement planning module sends a first message to the mobile phone, where the first message indicates that the target parking space is in the occupied state.

In S2103, the mobile phone gives a prompt that the target parking space is occupied.

For example, as shown in FIG. 25, the mobile phone may prompt "The parking space is occupied".

Optionally, in S2104, when detecting that the target parking space is in a vacant state, the movement planning module stops sending the first message.

For example, as shown in FIG. 26, when detecting that the target parking space is in the vacant state, the movement planning module stops sending the first message, and sends a second message to the mobile phone, where the second message indicates that the target parking space is in the vacant state. In response to the second message, the mobile phone may give a prompt that the vehicle is parked into the parking space by using an enhanced parking assist function.

In S2105, the movement planning activates enhanced parking assist.

In FIG. 46, an example in which the vehicle includes the movement planning module and a finite state machine is used for description. Embodiments of this application are not limited thereto. For example, functions implemented by the finite state machine and the movement planning module may alternatively be implemented by a unified module or system. For example, the functions may be implemented by a parking system or an ADAS in the vehicle.

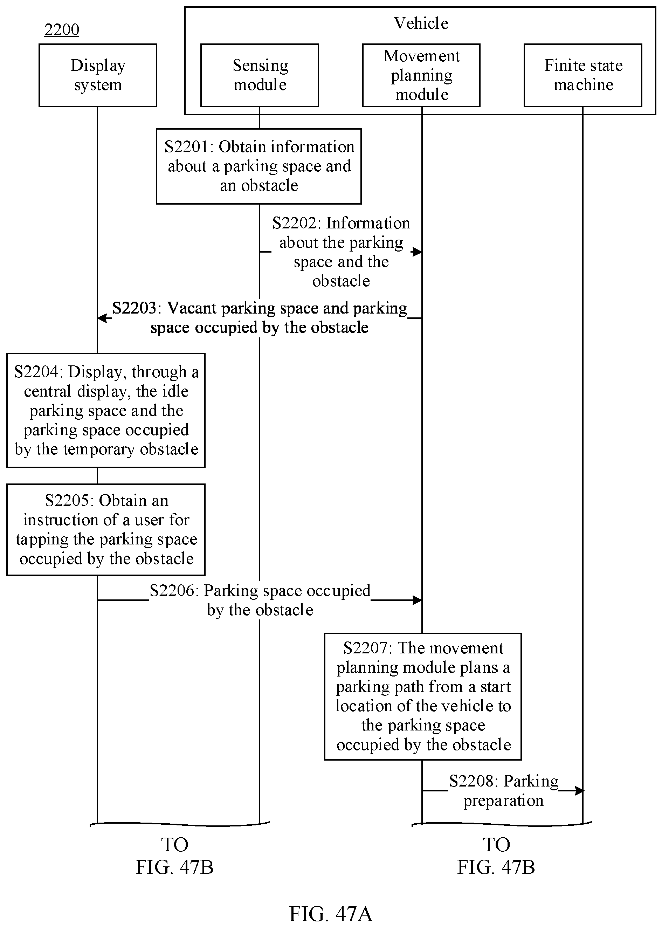

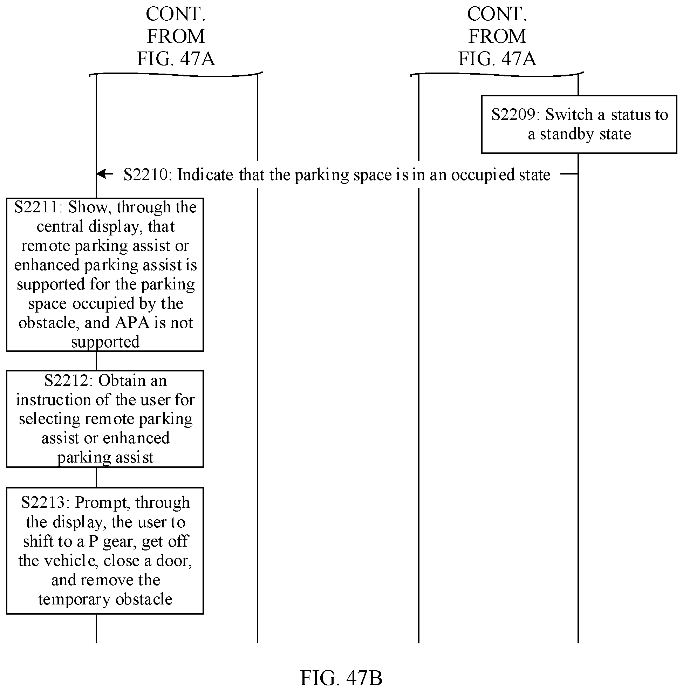

FIG. 47A and FIG. 47B are a schematic flowchart of a parking method 2200 according to an embodiment of this application. The method 2200 may be performed by modules in a vehicle. The method 2200 includes the following steps.

Optionally, in S2201, a sensing module obtains information about a parking space and an obstacle.

Optionally, that the sensing module obtains the information about the parking space and the obstacle includes: When the vehicle is in a parking lot and a speed of the vehicle is less than or equal to a preset speed, the sensing module obtains the information about the parking space and the temporary obstacle.

For example, the preset speed is 20 km/h.

For example, the obstacle may include a traffic cone, a parking barrier, a motorcycle, a non-motor vehicle (for example, a bicycle), another vehicle, or the like that is located in a parking space.

Optionally, in S2202, the sensing module sends the information about the parking space and the obstacle to a movement planning module.

Optionally, in S2203, the movement planning module sends information about a vacant parking space and the parking space occupied by the obstacle to a display system.

For example, the movement planning module sends information about the parking space 303 to the parking space 305 and information about the traffic cone to the display system.

Optionally, in S2204, the display system may display, through a central display, the vacant parking space and the parking space occupied by the obstacle.

For example, as shown in FIG. 21, the vehicle may display the parking space 303 to the parking space 305 through the display, where the parking space 303 and the parking space 304 are the vacant parking spaces, and the parking space 305 is the parking space occupied by the obstacle.

In S2205, the display system obtains an instruction from a user for tapping the parking space occupied by the obstacle.

For example, as shown in FIG. 21, the display system may obtain an operation that the user taps the parking space 305.

In S2206, the display system sends information about the parking space occupied by the obstacle to the movement planning module.

Optionally, in S2207, the movement planning module plans a parking path from a start location of the vehicle to the parking space occupied by the obstacle.

For example, as shown in FIG. 22, the vehicle may display the parking path.

Optionally, in S2208, the movement planning module sends parking preparation information to a finite state machine.

Optionally, in S2209, the finite state machine switches a status of the vehicle to a standby (standby) state based on the parking preparation information sent by the movement planning module.

In S2210, the finite state machine indicates, to the display system, that the parking space is in an occupied state.

In S2211, in response to receiving the indication, the display system may show, through the central display, that remote parking assist or enhanced parking assist is supported for the parking space occupied by the obstacle, and APA is not supported.

For example, as shown in FIG. 22, the display system may show, through the central display, that enhanced parking assist or remote parking assist is supported for the parking space 305 (the control 1302 and the control 1303 can be tapped), and APA is not supported (the control 1301 cannot be tapped).

In S2212, the display system obtains an instruction of the user for selecting remote parking assist or enhanced parking assist.

For example, as shown in FIG. 22, when detecting an operation that the user taps the control 1302, the display system obtains an instruction of the user for selecting enhanced parking assist.

In S2213, the display system prompts, through the central display, the user to shift to a P gear, get off the vehicle, close a door, and remove the temporary obstacle.

For example, as shown in FIG. 23, when detecting the operation that the user taps the control 1302, the display system may display the prompt information "Shift to the P gear, get off the vehicle, close the door, and remove the obstacle in the parking space" through the central display.

In FIG. 47A and FIG. 47B, an example in which the vehicle includes the three modules: the sensing module, the movement planning module, and the finite state machine is used for description. Embodiments of this application are not limited thereto. For example, functions implemented by the sensing module, the movement planning module, and the finite state machine may alternatively be implemented by a unified module or system. For example, the functions may be implemented by a parking system or an ADAS in the vehicle.

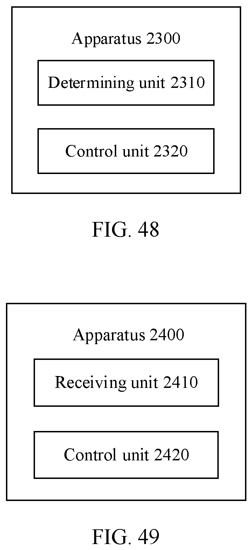

FIG. 48 is a block diagram of a parking apparatus 2300 according to an embodiment of this application. The apparatus 2300 includes: a determining unit 2310, configured to determine a target parking space, where the target parking space is in an occupied state, the determining unit 2310 is further configured to determine a parking mode, and the parking mode includes enhanced parking assist; and a control unit 2320, configured to: in response to the target parking space being in a vacant state, control a vehicle to perform enhanced parking assist into the target parking space.

Optionally, the control unit 2320 is specifically configured to: in response to determining, by the determining unit, the parking mode and the target parking space being in the occupied state, control the vehicle to output first prompt information, where the first prompt information indicates that enhanced parking assist is incapable of being activated and/or indicates that a user needs to update a status of the target parking space to the vacant state; and in response to the status of the target parking space being updated to the vacant state, control the vehicle to be parked into the target parking space.

Optionally, the control unit 2320 is specifically configured to: in response to determining, by the determining unit, the parking mode and the target parking space being in the occupied state, control the vehicle to travel from a start location to a vicinity of the target parking space and then stop; and in response to a status of the target parking space being updated to the vacant state, control the vehicle to be parked into the target parking space.

Optionally, the control unit 2320 is further configured to control the vehicle to output second prompt information, where the second prompt information indicates that a user needs to update the status of the target parking space to the vacant state, and an output manner of the second prompt information includes at least one of the following: blinking of a vehicle light, a sound, or prompt information pushed to a mobile terminal.

Optionally, the apparatus 2300 further includes a receiving unit, configured to: before the determining unit determines the parking mode, receive an instruction of the user, where the instruction indicates that the user activates parking. The control unit 2320 is further configured to: in response to the received instruction, control the vehicle to travel from the start location to the vicinity of the target parking space and then stop.

In an embodiment, the determining unit 2310 is configured to determine a target parking space, where the target parking space is in an occupied state. The determining unit is further configured to determine a parking mode 2310, where the parking mode includes remote parking assist. The control unit 2320 is configured to: in response to the target parking space being in a vacant state, control a vehicle to perform remote parking assist into the target parking space.

Optionally, the control unit 2320 is specifically configured to: in response to determining, by the determining unit, the parking mode and the target parking space being in the occupied state, control the vehicle to output first prompt information, where the first prompt information indicates that remote parking assist is incapable of being activated and/or indicates that a user needs to update a status of the target parking space to the vacant state; and in response to the status of the target parking space being updated to the vacant state, control the vehicle to be parked into the target parking space.

Optionally, the control unit 2320 is specifically configured to: send a first message to a mobile terminal, where the first message indicates that the target parking space is in the occupied state, and the mobile terminal is configured to give a prompt that remote parking assist is incapable of being activated and/or give the user a prompt that the status of the target parking space needs to be updated to the vacant state.

Optionally, the control unit 2320 is specifically configured to: in response to receiving an instruction sent by a mobile terminal and the target parking space being in the occupied state, control the vehicle to travel from a start location to a vicinity of the target parking space and then stop, where the instruction is used by a user to activate remote parking assist on the mobile terminal; and in response to a status of the target parking space being updated to the vacant state, control the vehicle to be parked into the target parking space.

Optionally, the apparatus 2300 further includes a receiving unit, configured to: before the determining unit determines the parking mode, receive another instruction of the user, where the another instruction indicates that the user activates parking; and in response to the received another instruction, control the vehicle to travel from the start location to the vicinity of the target parking space and then stop.

FIG. 49 is a block diagram of a parking apparatus 2400 according to an embodiment of this application. The apparatus 2400 includes: a receiving unit 2410, configured to receive a first message sent by a vehicle, where the first message indicates that a target parking space is in an occupied state; and a control unit 2420, configured to: in response to the first message, control a prompt apparatus to give a prompt that a parking mode is incapable of being activated, and/or give a user a prompt that a status of the target parking space needs to be updated to a vacant state, where the parking mode includes any one of the following: enhanced parking assist and remote parking assist.

Optionally, the parking mode is remote parking assist. The receiving unit 2410 is further configured to receive a second message sent by the vehicle, where the second message indicates that the target parking space is in the vacant state. The control unit 2420 is further configured to: in response to the second message, control a display apparatus to prompt the user to activate remote parking assist. The apparatus 2400 further includes a sending unit, configured to send a third message to the vehicle in response to an input of the user for activating remote parking assist, where the third message indicates to activate remote parking assist.

Optionally, the first message further indicates the vehicle to travel to a vicinity of the target parking space.

Optionally, the receiving unit 2410 is further configured to receive, before receiving the first message, the third message sent by the vehicle, where the third message indicates that the vehicle is away from the target parking space. The control unit 2420 is further configured to: in response to the third message, control the prompt apparatus to prompt the user to activate remote parking assist.

Optionally, the parking mode is enhanced parking assist. The receiving unit 2410 is further configured to receive a fourth message sent by the vehicle, where the fourth message indicates that the target parking space is in the vacant state. The control unit 2420 is further configured to: in response to the fourth message, control the prompt apparatus to give a prompt that enhanced parking assist is activated.

An embodiment of this application further provides a parking system. The control system may include a sensor and a computing platform. The computing platform includes the apparatus 1000 or the apparatus 2300.

An embodiment of this application further provides a vehicle. The vehicle may include the parking apparatus 1000 or the apparatus 2300.

An embodiment of this application further provides a mobile terminal. The mobile terminal may include the parking apparatus 1100 or the apparatus 2400. It should be understood that division into units in the apparatus is merely logical function division. During actual implementation, all or some of the units may be integrated into one physical entity or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the apparatus may be implemented in a form of software invoked by a processor, or all units may be implemented in a form of a hardware circuit, or some units may be implemented in a form of software invoked by a processor, and a remaining part may be implemented in a form of a hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in a vehicle, the processing unit may be the processors 121 to 12n shown in FIG. 1.

An embodiment of this application further provides a parking system. The control system may include the foregoing vehicle and the foregoing mobile terminal, or include the foregoing apparatus 1000 and the foregoing apparatus 1100.

An embodiment of this application further provides a vehicle. The vehicle may include the foregoing parking apparatus 1000.

An embodiment of this application further provides a mobile terminal. The mobile terminal may include the foregoing parking apparatus 1100.

An embodiment of this application further provides a computer program product. The computer program product includes computer program code, and when the computer program code is run on a computer, the computer is enabled to perform the methods in the foregoing embodiments.

An embodiment of this application further provides a computer-readable medium. The computer-readable medium stores program code, and when the computer program code is run on a computer, the computer is enabled to perform the methods in the foregoing embodiments.

An embodiment of this application further provides a chip. The chip includes a circuit, and the circuit is configured to perform the methods in the foregoing embodiments.

In an implementation process, steps in the foregoing methods may be implemented by using a hardware integrated logical circuit in a processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parking method, comprising:
receiving a first instruction from a user, wherein the first instruction instructs to park into a target parking space by using a remote parking assist RPA function, and a temporary obstacle is placed in the target parking space;
in response to receiving the first instruction, sending a second instruction to a mobile terminal, and controlling a prompt apparatus to prompt the user to get off a vehicle and remove the temporary obstacle, wherein the second instruction instructs to park into the target parking space by using the RPA function; and
when it is detected that the user gets off the vehicle and a third instruction sent by the mobile terminal is received, controlling the vehicle to be parked into the target parking space, wherein the third instruction instructs the vehicle to be parked into the target parking space.

2. The method according to claim 1, wherein before receiving the first instruction of the user, the method further comprises:
obtaining information about one or more parking spaces, wherein the one or more parking spaces comprise the target parking space; and
when receiving a fourth instruction of the user, controlling the prompt apparatus to give a prompt that the temporary obstacle is placed in the target parking space and only the RPA function is supported for the target parking space, wherein the fourth instruction is an instruction of the user for selecting the target parking space.

3. The method according to claim 1 or 2, wherein the method further comprises:
when a distance between the vehicle and the temporary obstacle is less than or equal to a preset distance, controlling the vehicle to stop parking into the target parking space, and sending a fifth instruction to the mobile terminal, wherein the fifth instruction instructs the mobile terminal to prompt the user to remove the temporary obstacle.

4. The method according to claim 3, wherein the method further comprises:
when it is detected that the user removes the temporary obstacle within first preset duration, controlling the vehicle to continue parking into the target parking space.

5. The method according to claim 3, wherein the method further comprises:
sending a sixth instruction to the mobile terminal when it is not detected that the user removes the temporary obstacle within first preset duration, wherein the sixth instruction indicates that the temporary obstacle is not removed within the first preset duration.

6. The method according to claim 5, wherein the method further comprises:
when a seventh instruction sent by the mobile terminal is received and it is detected that the temporary obstacle is removed, controlling the vehicle to continue parking into the target parking space, wherein the seventh instruction instructs to resume the RPA function.

7. A parking method, comprising:
receiving a second instruction sent by a vehicle, wherein the second instruction instructs to park into a target parking space by using the RPA function, and the target parking space is a parking space that is recognized by the vehicle and in which a temporary obstacle is placed;
controlling, according to the second instruction, a display apparatus to display a first interface, wherein the first interface comprises a first control, and the first control is a control for enabling the RPA function; and
sending a third instruction to the vehicle when obtaining a first input of a user for the first control, wherein the third instruction instructs the vehicle to start parking into the target parking space.

8. The method according to claim 7, wherein the method further comprises:
when obtaining the first input of the user for the first control, controlling the display apparatus to switch from displaying the first interface to displaying a second interface, wherein the second interface is a display interface of parking the vehicle into the target parking space;
receiving a fifth instruction sent by the vehicle, wherein the fifth instruction instructs the mobile terminal to prompt the user to remove the temporary obstacle; and
controlling, according to the fifth instruction, the display apparatus to switch from displaying the second interface to displaying a third interface, wherein the third interface comprises first prompt information, and the first prompt information is used to prompt the user to remove the temporary obstacle.

9. The method according to claim 8, wherein the method further comprises:
receiving a sixth instruction sent by the vehicle, wherein the sixth instruction indicates that the temporary obstacle is not removed within first preset duration; and
controlling, according to the sixth instruction, the display apparatus to switch from displaying the third interface to displaying a fourth interface, wherein the fourth interface comprises second prompt information, and the second prompt information is used to give a prompt that the RPA function is paused.

10. The method according to claim 9, wherein the fourth interface further comprises a second control, the second control is a control for resuming an auto parking function, and the method further comprises:
sending a seventh instruction to the vehicle when obtaining a second input of the user for the second control, wherein the seventh instruction instructs to resume the RPA function.

11. A parking apparatus, comprising:
a receiving unit, configured to receive a first instruction from a user, wherein the first instruction instructs to park into a target parking space by using a remote parking assist RPA function, and a temporary obstacle is placed in the target parking space;
a sending unit, configured to: in response to receiving the first instruction, send a second instruction to a mobile terminal, and control a prompt apparatus to prompt the user to get off a vehicle and remove the temporary obstacle, wherein the second instruction instructs to park into the target parking space by using the RPA function; and
a control unit, configured to: when it is detected that the user gets off the vehicle and a third instruction sent by the mobile terminal is received, control the vehicle to be parked into the target parking space, wherein the third instruction instructs the vehicle to be parked into the target parking space.

12. The apparatus according to claim 11, wherein the apparatus further comprises:
an obtaining unit, configured to obtain information about one or more parking spaces before the receiving unit receives the first instruction of the user, wherein the one or more parking spaces comprise the target parking space, wherein
the control unit is further configured to: when the receiving unit receives a fourth instruction of the user, control the prompt apparatus to give a prompt that the temporary obstacle is placed in the target parking space and only the RPA function is supported for the target parking space, wherein the fourth instruction is an instruction of the user for selecting the target parking space.

13. The apparatus according to claim 11 or 12, wherein
the control unit is further configured to: when a distance between the vehicle and the temporary obstacle is less than or equal to a preset distance, control the vehicle to stop parking into the target parking space, and send a fifth instruction to the mobile terminal, wherein the fifth instruction instructs the mobile terminal to prompt the user to remove the temporary obstacle.

14. The apparatus according to claim 13, wherein
the control unit is further configured to: when it is detected that the user removes the temporary obstacle within first preset duration, control the vehicle to continue parking into the target parking space.

15. The apparatus according to claim 13, wherein
the sending unit is further configured to send a sixth instruction to the mobile terminal when the control unit does not detect that the user removes the temporary obstacle within first preset duration, wherein the sixth instruction indicates that the temporary obstacle is not removed within the first preset duration.

16. The apparatus according to claim 15, wherein
the control unit is further configured to: when the receiving unit receives a seventh instruction sent by the mobile terminal and it is detected that the temporary obstacle is removed, control the vehicle to continue parking into the target parking space, wherein the seventh instruction instructs to resume the RPA function.

17. A parking apparatus, comprising:
a receiving unit, configured to receive a second instruction sent by a vehicle, wherein the second instruction instructs to park into a target parking space by using the RPA function, and the target parking space is a parking space that is recognized by the vehicle and in which a temporary obstacle is placed;
a control unit, configured to control, according to the second instruction, a display apparatus to display a first interface, wherein the first interface comprises a first control, and the first control is a control for enabling the RPA function; and
a sending unit, configured to send a third instruction to the vehicle when an obtaining unit obtains a first input of a user for the first control, wherein the third instruction instructs the vehicle to start parking into the target parking space.

18. The apparatus according to claim 17, wherein
the control unit is further configured to: when the obtaining unit obtains the first input of the user for the first control, control the display apparatus to switch from displaying the first interface to displaying a second interface, wherein the second interface is a display interface of parking the vehicle into the target parking space;
the receiving unit is further configured to receive a fifth instruction sent by the vehicle, wherein the fifth instruction instructs the mobile terminal to prompt the user to remove the temporary obstacle; and
the control unit is further configured to control, according to the fifth instruction, the display apparatus to switch from displaying the second interface to displaying a third interface, wherein the third interface comprises first prompt information, and the first prompt information is used to prompt the user to remove the temporary obstacle.

19. The apparatus according to claim 18, wherein
the receiving unit is further configured to receive a sixth instruction sent by the vehicle, wherein the sixth instruction indicates that the temporary obstacle is not removed within first preset duration; and
the control unit is further configured to control, according to the sixth instruction, the display apparatus to switch from displaying the third interface to displaying a fourth interface, wherein the fourth interface comprises second prompt information, and the second prompt information is used to give a prompt that the RPA function is paused.

20. The apparatus according to claim 19, wherein the fourth interface further comprises a second control, the second control is a control for resuming an auto parking function; and
the sending unit is further configured to send a seventh instruction to the vehicle when the obtaining unit obtains a second input of the user for the second control, wherein the seventh instruction instructs to resume the RPA function.

21. A parking apparatus, comprising:
a memory, configured to store a computer program; and
a processor, configured to execute the computer program stored in the memory, to enable the apparatus to perform the method according to any one of claims 1 to 6.

22. A parking apparatus, comprising:
a memory, configured to store a computer program; and
a processor, configured to execute the computer program stored in the memory, to enable the apparatus to perform the method according to any one of claims 7 to 10.

23. A vehicle, comprising the apparatus according to any one of claims 11 to 16, or 21.

24. A mobile terminal, comprising the apparatus according to any one of claims 17 to 20, or 22.

25. A computer-readable storage medium, wherein the computer-readable storage medium stores instructions, and when the instructions are executed by a processor, the processor is enabled to implement the method according to any one of claims 1 to 6 or implement the method according to any one of claims 7 to 10.

26. A computer program product, wherein the computer program product comprises computer program code, and when the computer program code is run on a computer, the computer is enabled to implement the method according to any one of claims 1 to 6 or implement the method according to any one of claims 7 to 10.

27. A chip, wherein the chip comprises a circuit, and the circuit is configured to perform the method according to any one of claims 1 to 6 or implement the method according to any one of claims 7 to 10.

28. A parking method, comprising:
determining a target parking space, wherein the target parking space is in an occupied state;
determining a parking mode, wherein the parking mode comprises enhanced parking assist; and
in response to the target parking space being in a vacant state, controlling a vehicle to perform enhanced parking assist into the target parking space.

29. The method according to claim 28, wherein in response to the target parking space being in the vacant state, controlling the vehicle to perform enhanced parking assist into the target parking space comprises:
in response to determining the parking mode and the target parking space being in the occupied state, controlling the vehicle to output first prompt information, wherein the first prompt information indicates that enhanced parking assist is incapable of being activated and/or indicates that a user needs to update a status of the target parking space to the vacant state; and
in response to the status of the target parking space being updated to the vacant state, controlling the vehicle to be parked into the target parking space.

30. The method according to claim 28, wherein in response to the target parking space being in the vacant state, controlling the vehicle to perform enhanced parking assist into the target parking space comprises:
in response to determining the parking mode and the target parking space being in the occupied state, controlling the vehicle to travel from a start location to a vicinity of the target parking space and then stop; and
in response to a status of the target parking space being updated to the vacant state, controlling the vehicle to be parked into the target parking space.

31. The method according to claim 30, wherein when the parking mode is determined and the target parking space is in the occupied state, traveling, by the vehicle, from the start location to the vicinity of the target parking space and then stopping further comprises:
controlling the vehicle to output second prompt information, wherein the second prompt information indicates that a user needs to update the status of the target parking space to the vacant state, and an output manner of the second prompt information comprises at least one of the following: blinking of a vehicle light, a sound, or prompt information pushed to a mobile terminal.

32. The method according to any one of claims 28 to 31, wherein before determining the parking mode, the method further comprises:
receiving an instruction of the user, wherein the instruction indicates that the user activates parking; and
in response to the received instruction, controlling the vehicle to travel from the start location to the vicinity of the target parking space and then stop.

33. A parking method, comprising:
determining a target parking space, wherein the target parking space is in an occupied state;
determining a parking mode, wherein the parking mode comprises remote parking assist; and
in response to the target parking space being in a vacant state, controlling the vehicle to perform remote parking assist into the target parking space.

34. The method according to claim 33, wherein in response to the target parking space being in the vacant state, controlling the vehicle to perform remote parking assist into the target parking space comprises:
in response to determining the parking mode and the target parking space being in the occupied state, controlling the vehicle to output first prompt information, wherein the first prompt information indicates that remote parking assist is incapable of being activated or indicates that a user needs to update a status of the target parking space to the vacant state; and
in response to the status of the target parking space being updated to the vacant state, controlling the vehicle to be parked into the target parking space.

35. The method according to claim 34, wherein controlling the vehicle to output the first prompt information comprises:
sending a first message to a mobile terminal, wherein the first message indicates that the target parking space is in the occupied state, and the mobile terminal is configured to give a prompt that remote parking assist is incapable of being activated and/or give the user a prompt that the status of the target parking space needs to be updated to the vacant state.

36. The method according to claim 33, wherein in response to the target parking space being in the vacant state, controlling the vehicle to perform remote parking assist into the target parking space comprises:
in response to receiving an instruction sent by a mobile terminal and the target parking space being in the occupied state, controlling the vehicle to travel from a start location to a vicinity of the target parking space and then stop, wherein the instruction is used by a user to activate remote parking assist on the mobile terminal; and
in response to a status of the target parking space being updated to the vacant state, controlling the vehicle to be parked into the target parking space.

37. The method according to any one of claims 33 to 36, wherein before receiving a second instruction of the user, the method further comprises:
receiving another instruction of the user, wherein the another instruction indicates that the user activates parking; and
in response to the received another instruction, controlling the vehicle to travel from the start location to the vicinity of the target parking space and then stop.

38. A parking method, comprising:
receiving a first message sent by a vehicle, wherein the first message indicates that a target parking space is in an occupied state; and
in response to the first message, controlling a prompt apparatus to give a prompt that a parking mode is incapable of being activated, and/or give a user a prompt that a status of the target parking space needs to be updated to a vacant state, wherein the parking mode comprises any one of the following: enhanced parking assist and remote parking assist.

39. The method according to claim 38, wherein the parking mode is remote parking assist, and the method further comprises:
receiving a second message sent by the vehicle, wherein the second message indicates that the target parking space is in the vacant state;
in response to the second message, controlling a display apparatus to prompt the user to activate remote parking assist; and
sending a third message to the vehicle in response to an input of the user for activating remote parking assist, wherein the third message indicates to activate remote parking assist.

40. The method according to claim 38 or 39, wherein the first message further indicates the vehicle to travel to a vicinity of the target parking space.

41. The method according to any one of claims 38 to 40, wherein before receiving the first message sent by the vehicle, the method further comprises:
receiving a fourth message sent by the vehicle, wherein the fourth message indicates that the vehicle is far away from the target parking space; and
in response to the fourth message, controlling the prompt apparatus to prompt the user to activate remote parking assist.

42. The method according to claim 38, wherein the parking mode is enhanced parking assist, and the method further comprises:
receiving a fifth message sent by the vehicle, wherein the fifth message indicates that the target parking space is in the vacant state; and
in response to the fifth message, controlling the prompt apparatus to give a prompt that enhanced parking assist is activated.

43. A parking apparatus, comprising:
a determining unit, configured to determine a target parking space, wherein the target parking space is in an occupied state; and
the determining unit is further configured to determine a parking mode, wherein the parking mode comprises enhanced parking assist; and
a control unit, configured to: in response to the target parking space being in a vacant state, control a vehicle to perform enhanced parking assist into the target parking space.

44. The apparatus according to claim 43, wherein the control unit is specifically configured to:
in response to determining, by the determining unit, the parking mode and the target parking space being in the occupied state, control the vehicle to output first prompt information, wherein the first prompt information indicates that enhanced parking assist is incapable of being activated and/or indicates that a user needs to update a status of the target parking space to the vacant state; and
in response to the status of the target parking space being updated to the vacant state, control the vehicle to be parked into the target parking space.

45. The apparatus according to claim 43, wherein the control unit is specifically configured to:
in response to determining, by the determining unit, the parking mode and the target parking space being in the occupied state, control the vehicle to travel from a start location to a vicinity of the target parking space and then stop; and
in response to a status of the target parking space being updated to the vacant state, control the vehicle to be parked into the target parking space.

46. The apparatus according to claim 45, wherein the control unit is further configured to:
control the vehicle to output second prompt information, wherein the second prompt information indicates that a user needs to update the status of the target parking space to the vacant state, and an output manner of the second prompt information comprises at least one of the following: blinking of a vehicle light, a sound, or prompt information pushed to a mobile terminal.

47. The apparatus according to any one of claims 43 to 46, wherein the apparatus further comprises:
a receiving unit, configured to: before the determining unit determines the parking mode, receive an instruction of the user, wherein the instruction indicates that the user activates parking; and
the control unit is further configured to: in response to the received instruction, control the vehicle to travel from the start location to the vicinity of the target parking space and then stop.

48. A parking apparatus, comprising:
a determining unit, configured to determine a target parking space, wherein the target parking space is in an occupied state; and
the determining unit is further configured to determine a parking mode, wherein the parking mode comprises remote parking assist; and
a control unit, configured to: in response to the target parking space being in a vacant state, control a vehicle to perform remote parking assist into the target parking space.

49. The apparatus according to claim 48, wherein the control unit is specifically configured to:
in response to determining, by the determining unit, the parking mode and the target parking space being in the occupied state, control the vehicle to output first prompt information, wherein the first prompt information indicates that remote parking assist is incapable of being activated or indicates that a user needs to update a status of the target parking space to the vacant state; and
in response to the status of the target parking space being updated to the vacant state, control the vehicle to be parked into the target parking space.

50. The apparatus according to claim 49, wherein the control unit is specifically configured to:
send a first message to a mobile terminal, wherein the first message indicates that the target parking space is in the occupied state, and the mobile terminal is configured to give a prompt that remote parking assist is incapable of being activated and/or give the user a prompt that the status of the target parking space needs to be updated to the vacant state.

51. The apparatus according to claim 48, wherein the control unit is specifically configured to:
in response to receiving an instruction sent by a mobile terminal and the target parking space being in the occupied state, control the vehicle to travel from a start location to a vicinity of the target parking space and then stop, wherein the instruction is used by a user to activate remote parking assist on the mobile terminal; and
in response to a status of the target parking space being updated to the vacant state, control the vehicle to be parked into the target parking space.

52. The apparatus according to any one of claims 48 to 51, wherein the apparatus further comprises:
a receiving unit, configured to: before the determining unit determines the parking mode, receive another instruction of the user, wherein the another instruction indicates that the user activates parking; and
in response to the received another instruction, control the vehicle to travel from the start location to the vicinity of the target parking space and then stop.

53. A parking apparatus, comprising:
a receiving unit, configured to receive a first message sent by a vehicle, wherein the first message indicates that a target parking space is in an occupied state; and
a control unit, configured to: in response to the first message, control a prompt apparatus to give a prompt that a parking mode is incapable of being activated, and/or give a user a prompt that a status of the target parking space needs to be updated to a vacant state, wherein the parking mode comprises any one of the following: enhanced parking assist and remote parking assist.

54. The apparatus according to claim 53, wherein the parking mode is remote parking assist;
the receiving unit is further configured to receive a second message sent by the vehicle, wherein the second message indicates that the target parking space is in the vacant state;
the control unit is further configured to: in response to the second message, control a display apparatus to prompt the user to activate remote parking assist; and
the apparatus further comprises:
a sending unit, configured to send a third message to the vehicle in response to an input of the user for activating remote parking assist, wherein the third message indicates to activate remote parking assist.

55. The apparatus according to claim 53 or 54, wherein the first message further indicates the vehicle to travel to a vicinity of the target parking space.

56. The apparatus according to any one of claims 53 to 55, wherein
the receiving unit is further configured to: before receiving the first message, receive a fourth message sent by the vehicle, wherein the fourth message indicates that the vehicle is far away from the target parking space; and
the control unit is further configured to: in response to the fourth message, control the prompt apparatus to prompt the user to activate remote parking assist.

57. The apparatus according to claim 53, wherein the parking mode is enhanced parking assist;
the receiving unit is further configured to receive a fifth message sent by the vehicle, wherein the fifth message indicates that the target parking space is in the vacant state; and
the control unit is further configured to: in response to the fifth message, control the prompt apparatus to give a prompt that enhanced parking assist is activated.

58. A parking apparatus, comprising:
a memory, configured to store a computer program; and
a processor, configured to execute the computer program stored in the memory, to enable the apparatus to perform the method according to any one of claims 28 to 37.

59. A parking apparatus, comprising:
a memory, configured to store a computer program; and
a processor, configured to execute the computer program stored in the memory, to enable the apparatus to perform the method according to any one of claims 38 to 42.

60. A vehicle, comprising the apparatus according to any one of claims 43 to 52, or 58.

61. A mobile terminal, comprising the apparatus according to any one of claims 53 to 57, or 59.

62. A computer-readable storage medium, wherein the computer-readable storage medium stores instructions, and when the instructions are executed by a processor, the processor is enabled to implement the method according to any one of claims 28 to 37 or implement the method according to any one of claims 38 to 42.

63. A computer program product, wherein the computer program product comprises computer program code, and when the computer program code is run on a computer, the computer is enabled to implement the method according to any one of claims 28 to 37 or implement the method according to any one of claims 38 to 42.

64. A chip, wherein the chip comprises a circuit, and the circuit is configured to perform the method according to any one of claims 28 to 37 or implement the method according to any one of claims 38 to 42.
